# EUROPEAN PATENT SPECIFICATION

(11) **EP 1 528 658 B1**
(45) Date of publication and mention of the grant of the patent: **30.05.2012**
(21) Application number: 03784617.7
(22) Date of filing: 08.08.2003
(51) Int. Cl.: H02K 15/04

(54) **COIL FORMING DEVICE AND COIL FORMING METHOD**
SPULENERZEUGUNGSEINRICHTUNG UND SPULENERZEUGUNGSVERFAHREN
PROCEDE ET DISPOSITIF DE BOBINAGE

(30) Priority: 08.08.2002 JP 2002231978; 21.04.2003 JP 2003116241
(43) Date of publication of application: 04.05.2005
(73) Proprietor: AISIN AW CO., LTD., Anjo-shi, Aichi 444-1192 (JP)
(72) Inventor: HASHIMOTO, Shingo, c/o AISIN AW CO., LTD., Anjo-shi, Aichi 444-1192 (JP); KUROYANAGI, Tooru, c/o AISIN AW CO., LTD., Anjo-shi, Aichi 444-1192 (JP); YAMAGUCHI, Tsuyoshi, c/o AISIN AW CO., LTD., Anjo-shi, Aichi 444-1192 (JP)
(74) Representative: Vossius & Partner
(86) International application number: PCT/JP2003/010146
(87) International publication number: WO 2004/015846

(56) References cited:
- JP-A- 3 159 542
- JP-A- 9 009 588
- JP-A- 11 178 291
- JP-A- 51 138 803
- JP-A- 55 094 567
- JP-A- 56 012 845
- JP-A- 58 046 850
- JP-A- 63 001 349
- JP-A- 2003 158 860

## Description

### TECHNICAL FIELD

The present invention relates to an apparatus and a method for forming a coil to be used in a motor (e.g., an electric motor).

### BACKGROUND ART

When a motor including a stator having a plurality of single-pole coils inserted in the slots of a stator core is to be manufactured, for example, it is necessary to form a coil having a plurality of continuous single-pole coils.

In the coil forming method of the prior art, a winder for turning around a stationary bobbin to extract an electric wire (or a wire) is used to form the single-pole coil by winding the electric wire around the bobbin. In order to form another single-pole coil continuously of the single-pole coil obtained, moreover, the winder is turned in the opposite direction around the bobbin again fixed, to form a single-pole coil having a reversed winding direction.

Moreover, a coil forming method similar to the aforementioned one for feeding the electric wire from a winder turning around the bobbin is disclosed in JP-A-2000-253631, for example. In Patent Publication, the external diameter of the bobbin for winding the electric wire can be changed, and a flyer is turned as the aforementioned winder around the bobbin. The wound single-pole coils are sequentially pushed out to a blade thereby to form the continuous-pole coil to be used in the motor.

However, the coil forming method of the prior art thus far described has the following problems. Specifically, the electric wire is fed while the winder is being turned, so that it is wound on the bobbin while being twisted according to the turning motions of the winder. In case the coil is formed with the electric wire being twisted, the improvement in the occupation percentage of the coil is deteriorated by the reasons that the electric wire cannot be moved by themselves into slots or that a dead space is established by the twist.

The present invention has been conceived in view of those problems of the prior art and contemplates to provide a coil forming method and a coil forming apparatus, which can form a single-pole coil without twisting an electric wire.

### DISCLOSURE OF THE INVENTION

According to the invention, a coil forming apparatus (Claim 1) for forming a continuous-pole coil having a plurality of single-pole coils wound with an electric wire in a loop shape is proposed.

The coil forming apparatus is characterized: by comprising a magazine made swingable around a swinging center axis; in that the magazine includes: a holder made turnable around a rotating center axis different from the swinging center axis; and a plurality of coil bobbins so arranged around the holder as to move their individual positions relative to the holder, for winding the electric wire around their circumferences; and in that the individual coil bobbins can have their winding axes sequentially positioned to contain and adjoin the swinging center axis by the turns of the magazine around the rotating center axis.

In the coil forming apparatus of the invention, the coil bobbins are swung as a whole by the magazine so that the electric wire is wound around the coil bobbin brought into alignment or close to the swinging center axis, thereby to form the single-pole coil.

Specifically, in the invention, the holder and the coil bobbins arranged on the magazine are turned as a whole by the swinging motion of the magazine thereby to wind the electric wire. Unlike the prior art, therefore, the electric wire is not wound while turning the winder or the like from the outer circumference of the fixed bobbin, so that each single-pole coil can be formed around each coil bobbin with little twist in the electric wire.

By the turning motion of the holder, moreover, the individual coil bobbins can be brought sequentially into alignment or close to the swinging center axis for the electric wire winding operation. Although the coil forming apparatus is provided with the plurality of coil bobbins for forming the continuous-pole coil, therefore, it can wind the electric wire with the winding coil bobbin being hardly offset from the swinging center axis.

After the single-pole coil was formed around one coil bobbin, the holder is turned to bring the next coil bobbin adjoining that one coil bobbin close to the swinging center axis so that the single-pole coil can be formed like before.

As a result, the direction to feed the electric wire to each coil bobbin is hardly changed for winding the electric wire around the coil bobbin so that the electric wire can be stably wound. Therefore, the single-pole coils having little twist can be stably formed around all coil bobbins thereby to form the continuous-pole coil having little twist stably.

Further according to the invention, a coil forming method (Claim 7) is proposed characterized: by using a coil forming apparatus for forming a continuous-pole coil having a plurality of single-pole coils wound with an electric wire in a loop shape, the coil forming apparatus including a magazine made swingable around a swinging center axis, and constructed to include: a holder made turnable around a rotating center axis different from the swinging center axis; and a plurality of coil bobbins so arranged around the holder as to move their individual positions relative to the holder, for winding the electric wire around their circumferences, such that the coil bobbins can have their winding axes sequentially positioned to contain and adjoin the swinging center axis by the turns of the magazine around the rotating center axis; by comprising: an index step of positioning any object one of the coil bobbins to contain and adjoin the swinging center axis, by turning the holder around the rotating center axis; and a winding step of winding the electric wire around the object coil bobbin, by feeding the object coil bobbin with the electric wire and by swinging the magazine around the swinging center axis; and in that similar index steps and winding steps are thereafter suitably repeated on the remaining coil bobbins as the object ones to form a continuous-pole coil.

In the coil forming method of the invention, the coil forming apparatus for winding the electric wire around the coil bobbin brought into alignment or close to the swinging center axis by swinging the coil bobbins as a whole is used to perform the index step and the winding step sequentially on the individual coil bobbins thereby to form the continuous-pole coil.

Like the foregoing invention, therefore, the single-pole coils having little twist can be stably formed around all coil bobbins thereby to form the continuous-pole coil having little twist.

Moreover, the winding step is performed after the bobbin protruding step. Specifically, in case the object bobbin of the winding step is to be changed, it can be changed by performing the bobbin protruding step, but any special space for the electric wire feed need not be provided between the bobbins opposite to each other. Therefore, it is possible to sufficiently suppress the length of the crossover wire between the single-pole coils obtained. Thus, it is possible to form the single-pole coils without twisting the electric wire and to reduce the length of the crossover wire between the single-pole coils.

### BRIEF DESCRIPTION OF THE DRAWINGS

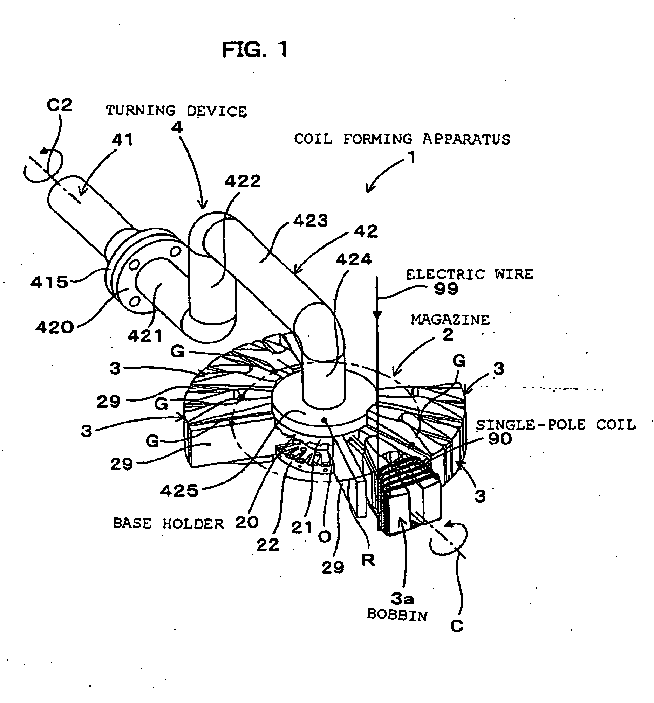

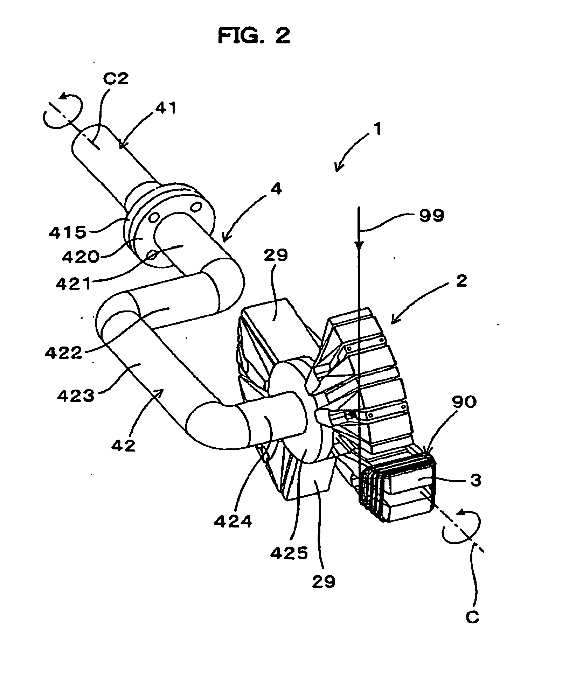

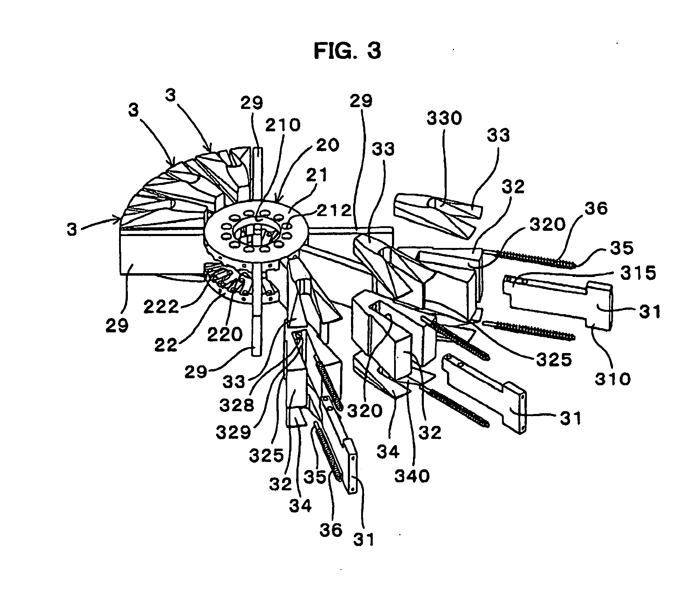

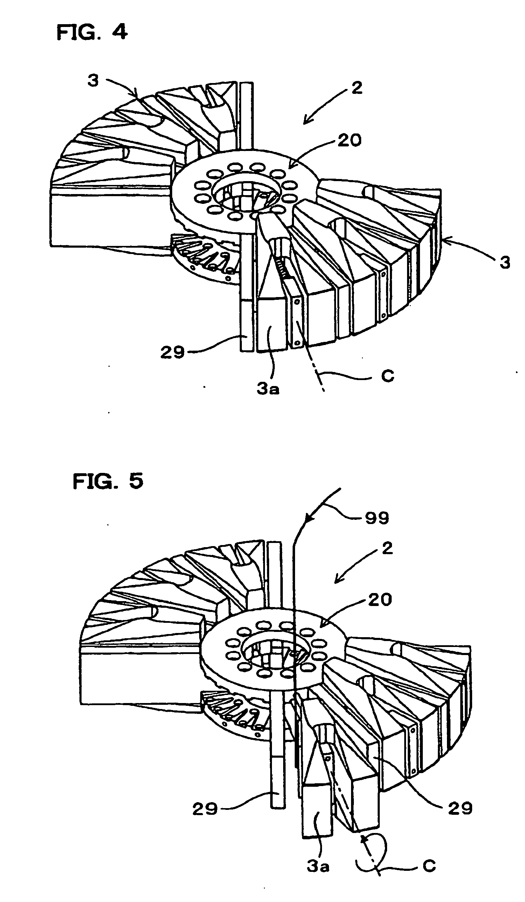

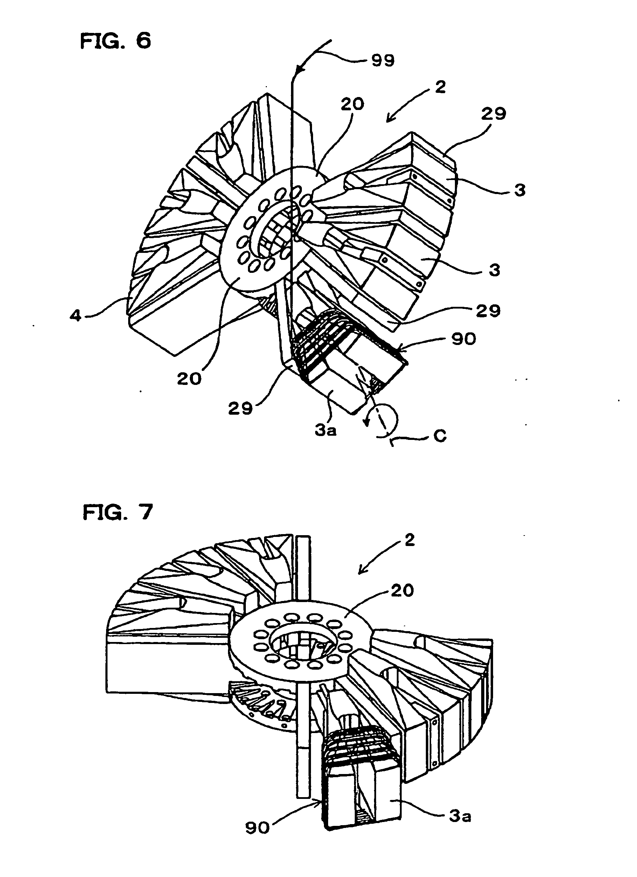

Fig. 1 is an explanatory view showing a construction of a coil forming apparatus of Embodiment 1; Fig. 2 is an explanatory view showing the state, in which a coil is being formed by the coil forming apparatus of Embodiment 1; Fig. 3 is an exploded explanatory view showing the structure of a magazine in Embodiment 1; Fig. 4 is an explanatory view showing the state of Embodiment 1, in which all the bobbins of the magazine are moved backward; Fig. 5 is an explanatory view showing the state of Embodiment 1, in which a first bobbin of the magazine is moved forward; Fig. 6 is an explanatory view showing the state of Embodiment 1, in which the magazine is rotated on the axis of a first bobbin to wind an electric wire; Fig. 7 is an explanatory
view showing the state of Embodiment 1, in which the winding of the electric wire around the first bobbin is completed; Fig. 8 is an explanatory view showing the state of Embodiment 1, in which the first bobbin is moved backward; Fig. 9 is an explanatory view showing the state of Embodiment 1, in which a second bobbin of the magazine is moved forward; Fig. 10 is an explanatory view showing the state of Embodiment 1, in which the magazine is rotated on the axis of the second bobbin to complete the winding of the electric wire; Fig. 11 is an explanatory view showing the state of Embodiment 1, in which the second bobbin is moved backward; Fig. 12 is an explanatory view showing the state of Embodiment 1, in which a third bobbin of the magazine is moved forward; Fig. 13 is an explanatory view showing the state of Embodiment 1, in which the magazine is rotated on the axis of the third bobbin to complete the winding of the electric wire; Fig. 14 is an explanatory view showing the state of Embodiment 1, in which the third bobbin is moved backward; Fig. 15 is an explanatory view showing a structure in Embodiment 1 for fixing a bobbin at a back position; Fig. 16 is an explanatory view showing the state of Embodiment 1, in which the positioning pins of a bobbin are disengaged from a guide plate; Fig. 17 is an explanatory view showing a fixing structure at a fore position of the bobbin; Fig. 18 is an explanatory view showing the state of Embodiment 2, in which a magazine is arranged in a stator core; Fig. 19 is an explanatory view showing the state of Embodiment 2, in which insertion blades and provisional shaping blades inserted into the magazine are moved forward; Fig. 20 is a perspective view showing a coil inserting apparatus in Embodiment 3; Fig. 21 is an explanatory view showing the state of Embodiment 3, in which insertion blades and provisional shaping blades in the coil inserting apparatus are moved forward; Fig. 22 is an explanatory view showing the forward directions of the insertion blades and the provisional shaping blades in Embodiment 3; Fig. 23 is a perspective explanatory view showing the state of Embodiment 4, in which single-pole coil forming bobbins are attached to the projections of a base holder to form single-pole coils; Fig. 24 is a perspective explanatory view showing the state of Embodiment 4, in which some of the single-pole coil forming bobbins having the single-pole coil wound thereon are removed from the projections of the base holder; Fig. 25 is a perspective view showing a coil forming apparatus of Embodiment 5; Fig. 26 is a perspective view showing the state of the coil forming apparatus of Embodiment 5, in which the individual single-pole coils are formed on the individual coil bobbins to form a continuous-pole coil; Fig. 27 is an explanatory view showing each bobbin in Embodiment 5 in the state, in which an outer bobbin portion takes a winding position; Fig. 28 is an explanatory view showing the bobbin in Embodiment 5 in the state, in which the outer bobbin portion takes a releasing position;

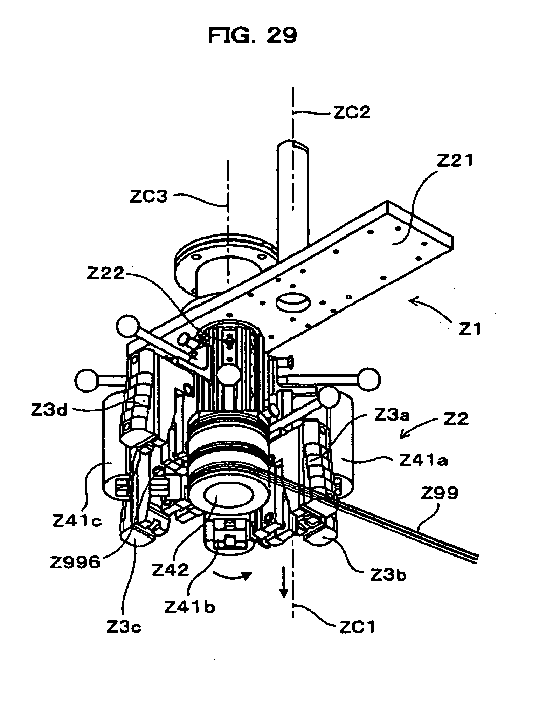

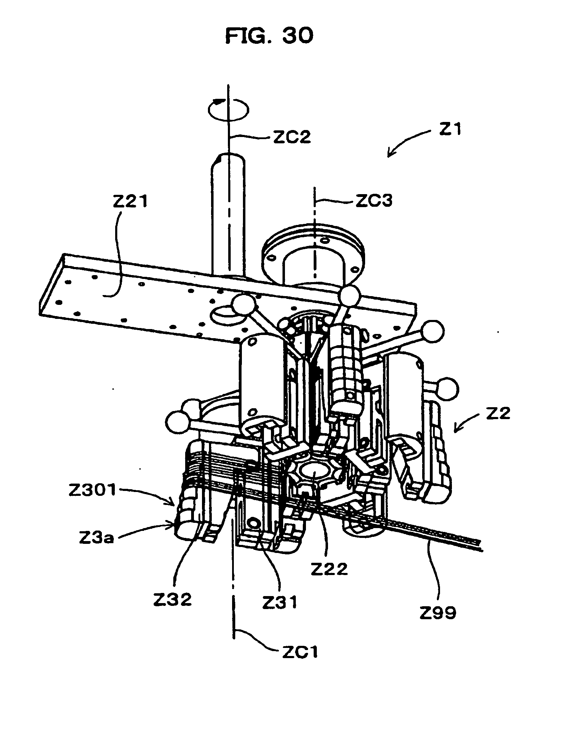

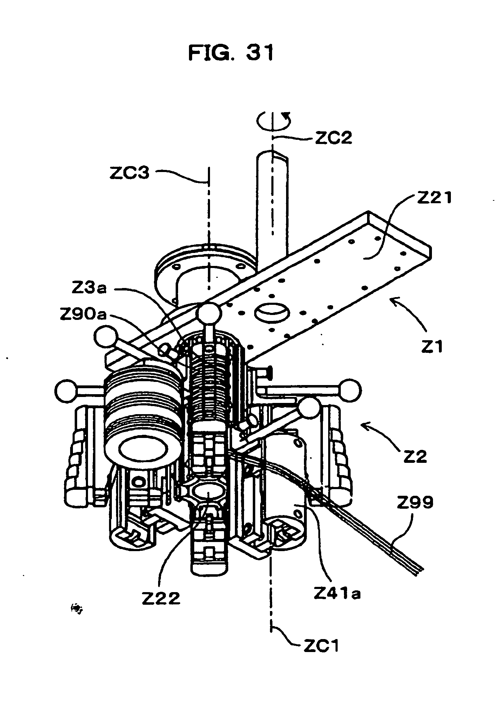

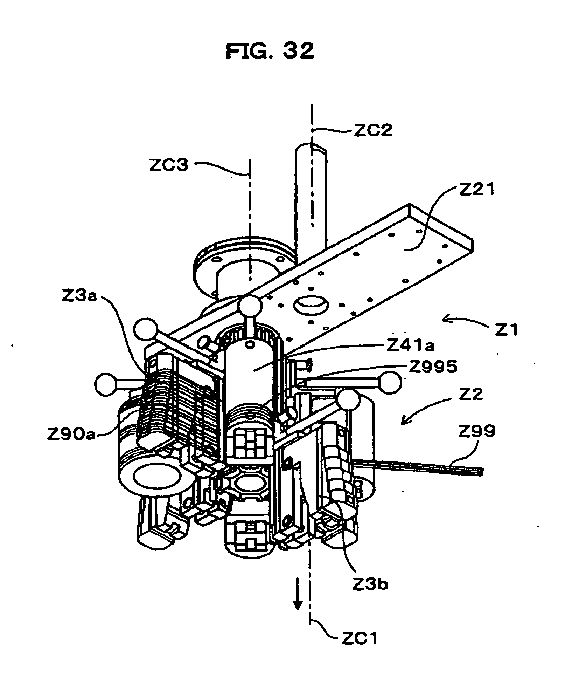

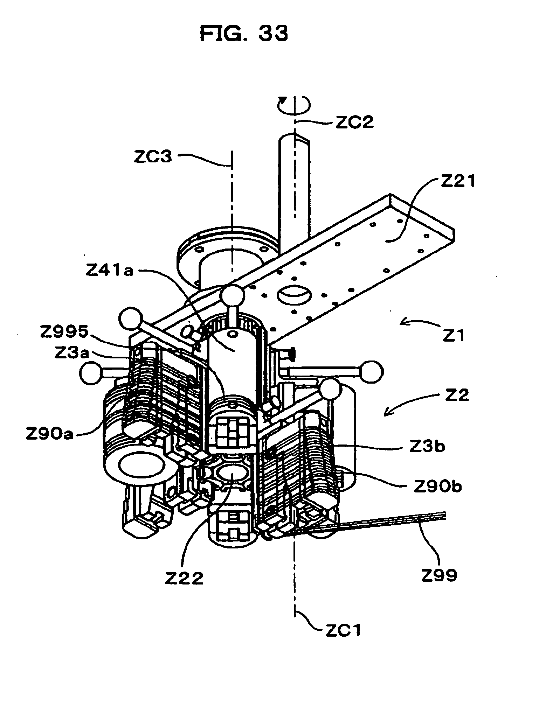

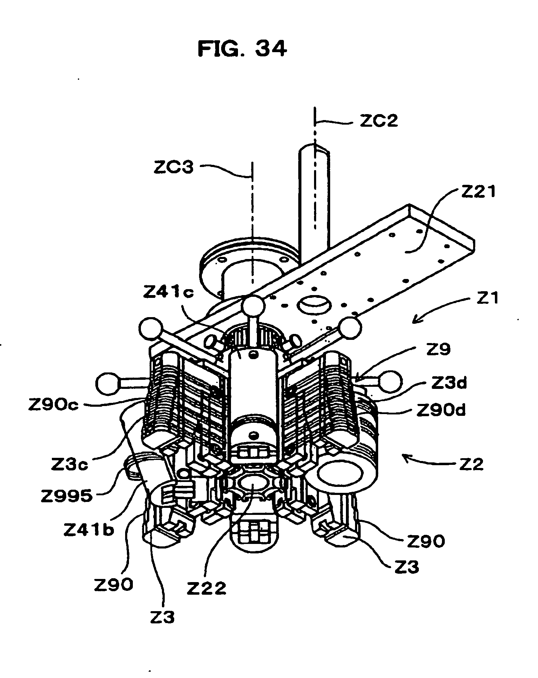

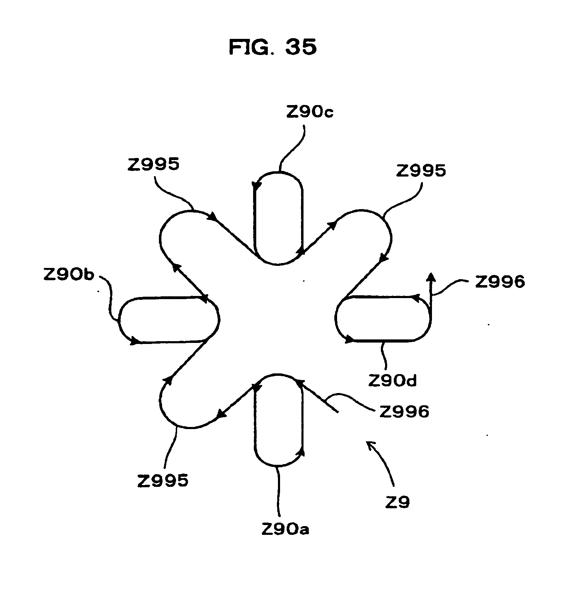

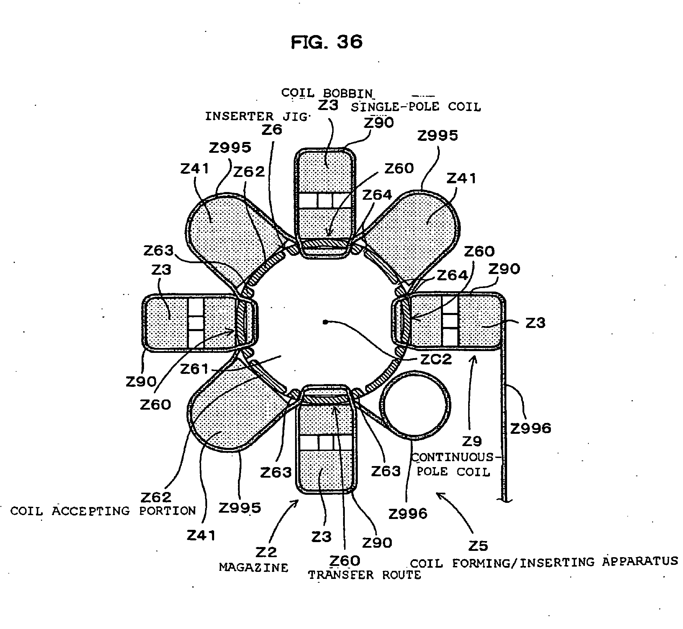

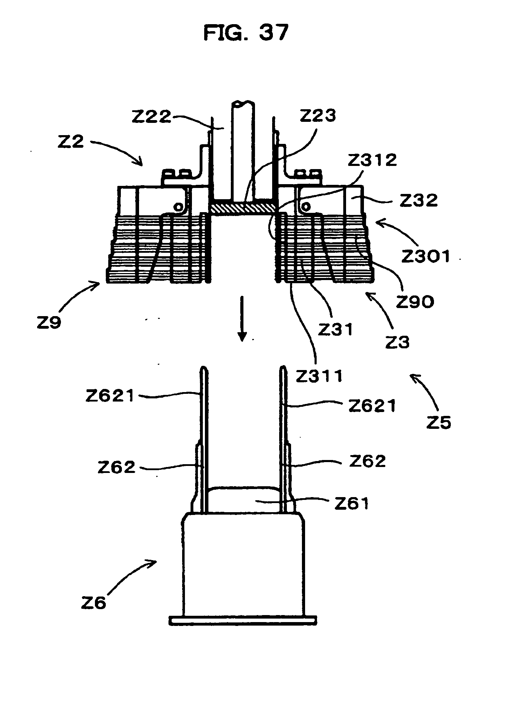

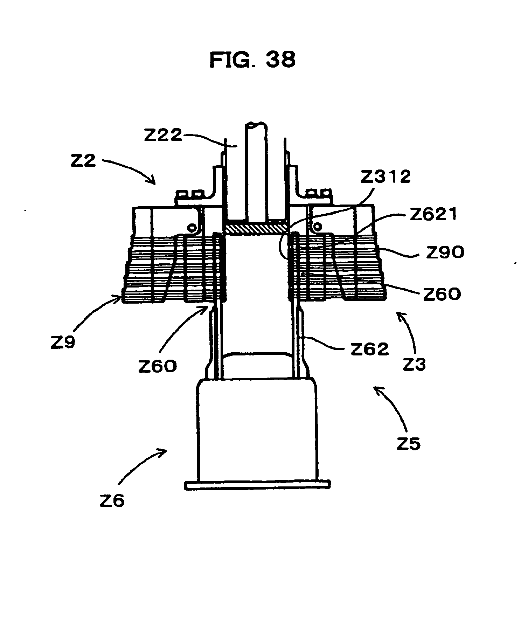

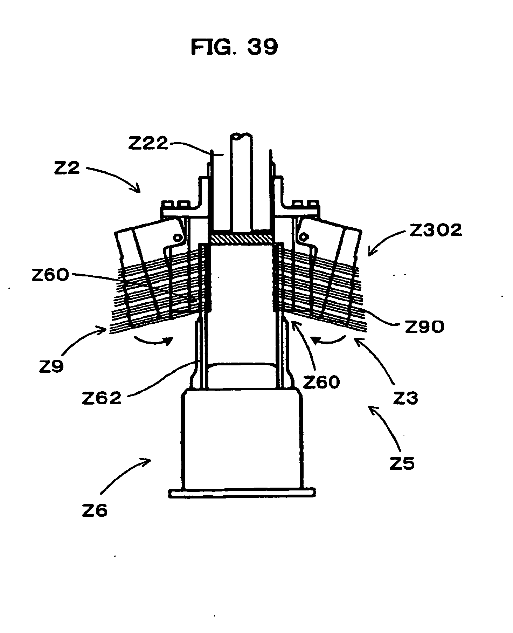

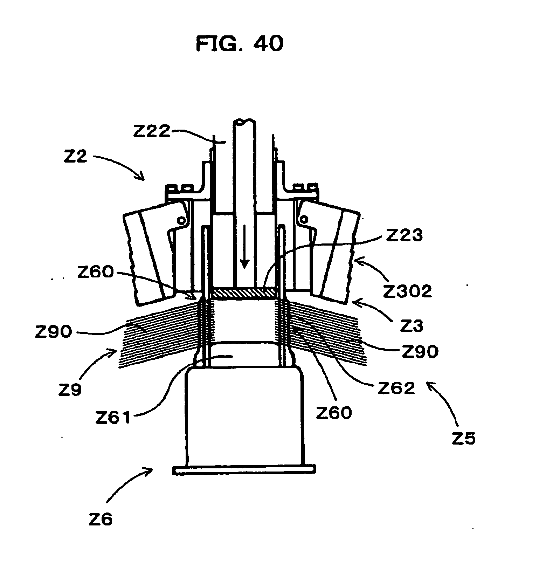

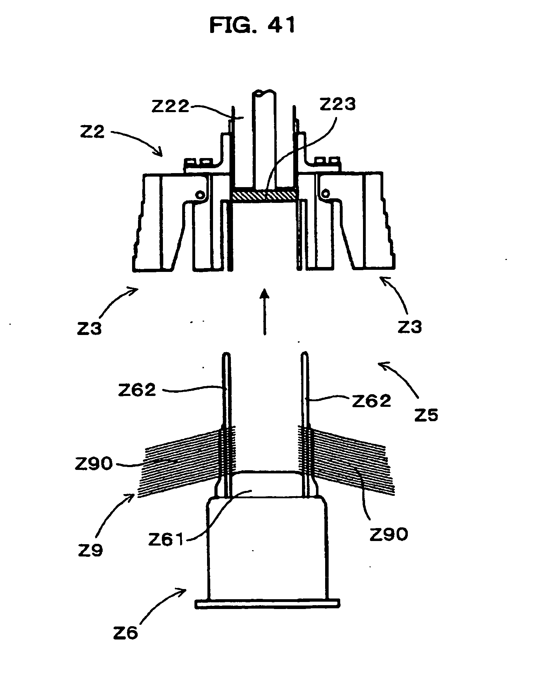

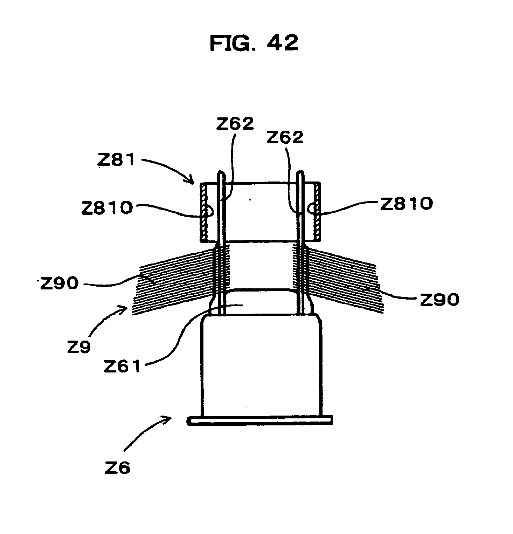

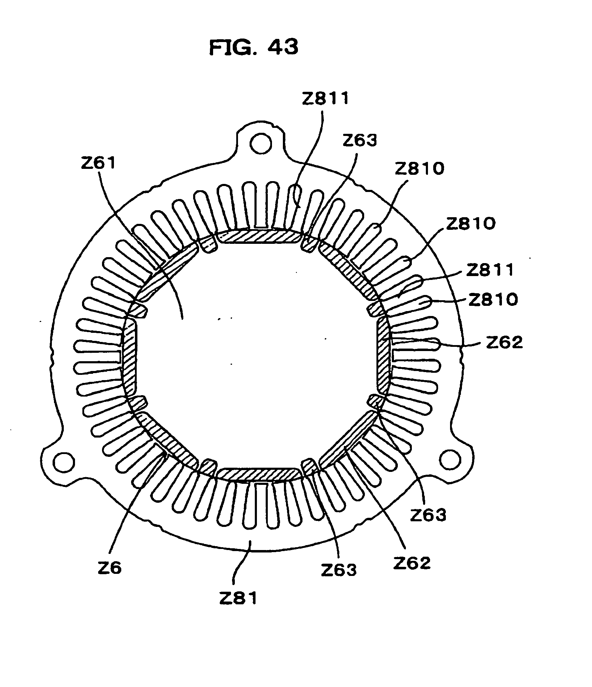

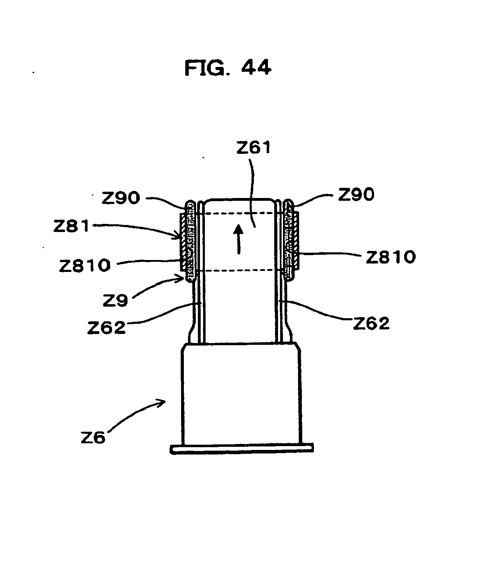

Fig. 29 is a perspective view showing the coil forming apparatus of Embodiment 5 in the state, in which a first coil bobbin is substantially aligned at its winding axis with the swinging center axis of a swing arm and is protruded farther than the remaining all bobbins; Fig. 30 is a perspective view showing the coil forming apparatus of Embodiment 5 in the state, in which the first coil bobbin is being wound with an electric wire to form a single-pole coil; Fig. 31 is a perspective view showing the coil forming apparatus of Embodiment 5 in the state, in which a first crossover bobbin is substantially aligned at its winding axis with the swinging center axis of the swing arm and is protruded farther than the remaining all bobbins so that the first crossover bobbin is being wound with the electric wire; Fig. 32 is a perspective view showing the coil forming apparatus of Embodiment 5 in the state, in which a second coil bobbin is substantially aligned at its winding axis with the swinging center axis of a swing arm and is protruded farther than the remaining all bobbins; Fig. 33 is a perspective view showing the coil forming apparatus of Embodiment 5 in the state, in which the second coil bobbin is being wound with an electric wire to form a single-pole coil; Fig. 34 is a perspective view showing the coil forming apparatus of Embodiment 5 in the state, in which all the bobbins are wound with the electric wire to form a continuous-pole coil; Fig. 35 is an explanatory view schematically showing the state, in which all the bobbins are wound with the electric wire to form the continuous-pole coil; Fig. 36 is an explanatory top plan view showing a coil forming/inserting apparatus of Embodiment 6 in the state, in whicha continuous-pole coil is being transf erred fromamagazine to an inserter jig; Fig. 37 is an explanatory view showing the coil forming/inserting apparatus of Embodiment 6 in the state, in which the magazine for holding the continuous-pole coil is moved forward to the inserter jig; Fig. 38 is an explanatory view showing the coil forming/inserting apparatus of Embodiment 6 in the state, in which the distal end of the coil accepting portion of the inserter jig is fitted in the fitting recess of the coil bobbin of the magazine; Fig. 39 is an explanatory view showing the coil forming/inserting apparatus of Embodiment 6 in the state, in which the outer bobbin portion of each coil bobbin of the magazine is moved to a releasingposition to release the single-pole coil from the coil bobbin; Fig. 40 is an explanatory view showing the coil forming/inserting apparatus of Embodiment 6 in the state, in which a push-out core of the magazine is moved forward to push the continuous-pole coil to a regulating position in the inserter jig; Fig. 41 is an explanatory view showing the coil forming/inserting apparatus of Embodiment 6 in the state, in which the magazine is moved backward from the inserter jig; Fig. 42 is an explanatory view showing the coil forming/inserting apparatus of Embodiment 6 in the state, in which each coil acceptingportionof the inserter jig confronts the inner circumference of a stator core; Fig. 43 is an explanatory top plan view showing the coil forming/inserting apparatus of Embodiment 6 in the state, in which the individual coil accepting portions and the individual guides of the inserter jig confront the inner circumference of the stator core; and Fig. 44 is an explanatory top plan view showing the coil forming/inserting apparatus of Embodiment 6 in the state, in which the continuous-pole coil is inserted and arranged from the inserter jig in the individual slots of the stator core.

### BEST MODE FOR CARRYING OUT THE INVENTION

### Embodiment 1

A coil forming method and a coil forming apparatus according to an embodiment of the invention will be described with reference to Fig. 1 to Fig. 17.

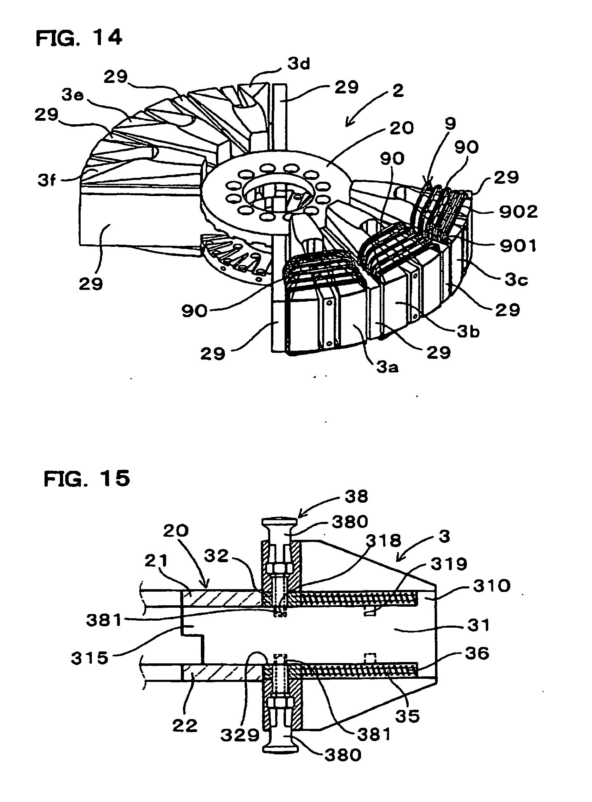

As shown in Fig. 1 and Fig. 2, a coil forming apparatus 1 of this embodiment is an apparatus for forming a motor coil 9 (as referred to Fig. 14) composed of three contiguous single-pole coils 90 having an electric wire 99 wound thereon in a loop shape. The coil forming apparatus 1 is constructed to include a magazine 2 and a turning device 4.

As shown in Fig. 1 to Fig. 3, the magazine 2 is provided with a base holder 20 and a plurality of bobbins 3 arranged on the outer circumference of the base holder 20. These bobbins 3 are arranged to move to and from the base holder 20 and are constructed such that any one can be protruded farther than the remaining ones.

As shown in Fig. 1 and Fig. 2, the turning device 4 is constructed to turn the magazine 2 as a whole on an axis C in the forward or backward direction of the protruded bobbin 3.

The coil forming apparatus 1 will be described in more detail in the following.

In the magazine 2, as shown in Fig. 3, the base holder 20 has a disc shape. Specifically, the base holder 20 have a pair of upper and lower ring-shaped plates 21 and 22, which are provided with central through holes 210 and 220 and a plurality of positioning holes 212 and 222 around the through holes, respectively. These central through holes 210 and 220 and positioning holes 212 and 222 are provided for determining the engaging position with the later-described turning device 4.

Moreover, the paired upper and lower ring-shaped plates 21 and 22 are connected to each other through separate plates 29, which are arranged in directions radially extending from their centers. In this embodiment, four separate plates 29 are arranged at a pitch of an internal angle of 30 degrees, and other four separate plates 29 are also arranged at an opposite position at the pitch of the internal angle of 30 degrees. Moreover, the bobbins 3 are individually arranged in the spaces of the internal angle of about 30 degrees interposed between the adjoining separate plates 29. In this embodiment, six bobbins 3 in total are provided by arranging the three adjoining ones individually at the opposite positions.

As shown in Fig. 3, the magazine 2 of this embodiment is so constructed that the separate plates 29 and the bobbins 3 can be additionally arranged at vacant positions on the outer circumference of the disc-shaped base holder 20 so that it can be provided with the twelve bobbins 3 at the maximum.

As shown in Fig. 3, on the other hand, the bobbins 3 are arranged to move forward or backward along the axes, which radially extend from the center point of the base holder 20. Moreover, each bobbin 3 has a sector shape to become wider along the axis.

As shown in Fig. 3, more specifically, each bobbin 3 has a bobbin body 32, which is formed into a general sector shape in its entirety when viewed from a front face and a back face taken in parallel with the ring-shaped plates 21 and 22 of the base holder 20 and which is provided with a cutout 320 at its central portion. Moreover, the bobbin body 32 is provided on its two side faces with steps 325 for positioning the single-pole coil 90 when this coil 90 is formed.

On the front face and the back face of the bobbin body 32, on the other hand, there are removably arranged shaping blocks 33 and 34 for shaping the single-pole coil 90 to be wound. These shaping blocks 33 and 34 also have a general sector shape and are provided with cutouts 330 and 340 at their central portions. Here, the shaping blocks 33 and 34 are fixed on the bobbin body 32 by driving the not-shown screws.

Moreover, the closer to the inner circumference from the outer circumference, the shaping blocks 33 and 34 are made the thicker, as shown in Fig. 3, so that the closer to the inner circumference, the single-pole coil to be formed may have the larger height.

As shown in Fig. 3, on the other hand, the bobbin body 32 has a rectangular through hole 329 in the axial direction from the cutout 320 to the base holder 20. Above and below this through hole 329, moreover, there are formed circular through rod holes 328. By fixing a guide plate 31 through the through hole 329 in the base holder 20, moreover, the bobbin 3 is arranged to move forward or backward in the base holder 20.

As shown in Fig. 3, more specifically, the guide plate 31 is provided with a proximal end 315 to be fixed in the base holder 20, and a distal end 310 enlarged vertically in size generally into a T-shape for regulating the fore position of the bobbin 3. Moreover, the proximal end 315 of the guide plate 31 is inserted into the through hole 329 opened in the bottom of the cutout 320 of the bobbin body 32, and rods 35 carrying springs 36 are inserted into the rod holes 328, which are formed above and below the through hole 329 of the bobbin body 32. Then, the distal end 315 of the guide plate 31 is clamped and fixed between the paired upper and lower ring-shaped plates 21 and 22 of the base holder 20, and the two rods 35 are fixed at their one-side ends in the ring-shaped plates 21 and 22 and at their other side ends on the distal ends 310 of the guide plate 31. As a result, the bobbin 3 is fixed to move forward or backward along the axis extending radially from the center point of the base holder 20.

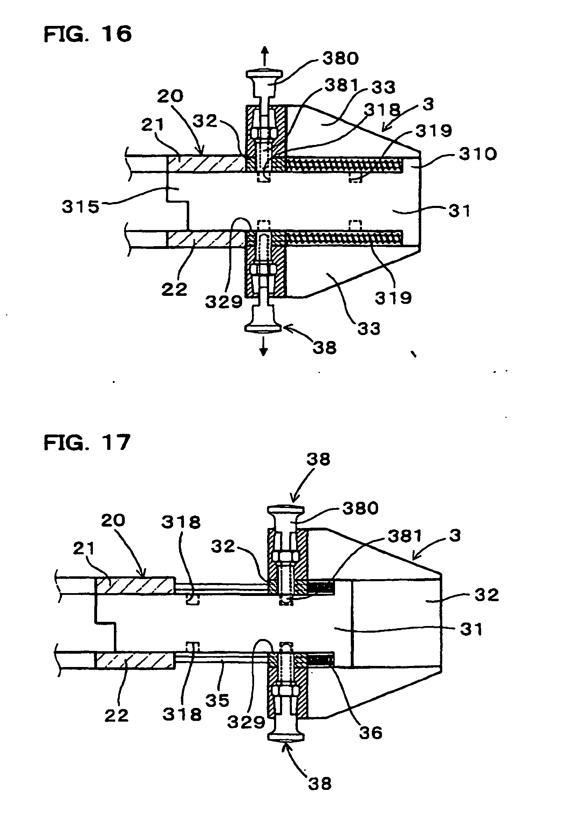

As shown in Fig. 15 to Fig. 17, on the other hand, the bobbin 3 is provided at its upper and lower portions with positioning pins 38, which are enabled to move pin distal ends 381 forward or backward by pinching pin heads 380. Moreover, the guide plate 31 is provided with pin holes 318 and 319, which can engage with the pin distal ends 381. With the pin distal ends 381 of the positioning pins 38 engaging with the pin holes 318, as shown in Fig. 15, the bobbin 3 is kept in the state where the bobbin 3 has moved backward close to the base holder 20. In case the bobbin 3 is to be moved forward, on the other hand, the positioning pins 38 are moved backward to release the engaging state between the pin distal ends 381 and the pin holes 318 so that the bobbin 3 is moved forward against the springs 36. As shown in Fig. 17, moreover, the positioning pins 38 are moved forward again to bring their distal ends 381 into engagement with the pin holes 319. As a result, the bobbin 3 is moved forward in the axial direction so far in its axial direction that it is fixed at the position apart from the base holder 20.

On the two sides of each of the bobbins 3 thus arranged, there exist the separate plates 29, which are extended from the outer circumference of the base holder 20. Moreover, predetermined spacings are held between the separate plates 29 and the bobbins 3 to function as the later-described coil retaining grooves.

In the magazine 2 of this embodiment, on other hand, the contour, which is formed by the distal ends of all the bobbins 3 being moved backward, has a circular shape around the center point of the base holder 20. In other words, the magazine 2 of this embodiment is shaped such that it can arrange the individual bobbins 3 confronting the inner circumference of the later-described stator core.

Next, the turning device 4 of this embodiment is provided, as shown in Fig. 1 and Fig. 2, with a straight portion 41 extended from the not-shown drive shaft, and a flexible joint 42 connected to the straight portion 41 through flanges 415 and 420. The flexible joint 42 is provided at its distal end with a connection flange 425 to be connected to the magazine 2.

As shown in Fig. 1 and Fig. 2, the flexible joint 42 is composed of: a first portion 421 extending coaxially with the straight portion 41; a second portion 422 bent by 90 degrees and extended from the first portion 421; a third portion 423 bent by 90 degrees from the second portion 422 and extended in parallel with the straight portion 41; and a fourth portion 424 bent by 90 degrees from the third portion 423. The aforementioned connection flange 425 is arranged at the distal end of the fourth portion 424.

The connection flange 425 is so positionally adjusted that the center points of the base holder 20 of the magazine 2 in the thickness direction and in the diameter direction may line on the axis of the straight portion 41 in case the connection flange 425 is connected to the base holder 20.

Moreover, the fixed position of the connection flange 425 in the circumferential direction of the magazine 2 can be suitably varied at a position where the axis c of the bobbin 3 is aligned with the center C2 of turns of the straight portion 41 of the turning device 4.

With reference to Fig. 4 to Fig. 14, here will be described a method for forming motor coils 9 having the single-pole coils 90 adjoining each other, by the coil forming apparatus 1 including the magazine 2 and the turning device 4 thus far described. Here, the turning device 4 is omitted from those Figures.

With all the bobbins 3 in the magazine 2 being moved backward, as shown in Fig. 4, the magazine 2 is so fixed at first on the turning device 4 that the turning center C2 (as referred to Fig. 1 and Fig. 2) of the turning device 4 is aligned with the axis C of the first bobbin 3a.

Next, a bobbin protruding step is performed by moving the first bobbin 3a forward to protrude farther than the remaining bobbins 3, as shown in Fig. 5. At this time, the bobbin 3a is released from the fixed state, in which the bobbin 3a has been fixed at the back position by the positioning pins 38 (Fig. 15 to Fig. 17), and is moved forward against the springs 36. The bobbin 3a is fixed again at the fore position by the positioning pins 38.

The electric wire 99 is then fed downward in one direction, as shown in Fig. 5, and its leading end is fixed on the magazine 2. The fixing method may fix the wire at a predetermined position by using a special fixing device or may be a method for binding the wire at an arbitrary position of the magazine 2. The latter method is adopted in this embodiment.

Next, a winding or coiling step is performed, as shown in Fig. 5 and Fig. 6, by feeding the electric wire 99 in one direction to the protruded bobbin 3a and by driving the turning device 4 to turn the magazine 2 as a whole around the axis C of the bobbin 3a. As a result, the electric wire 99 is wound on the protruded bobbin 3a, as shown in Fig. 7, to complete the formation of the first single-pole coil 90.

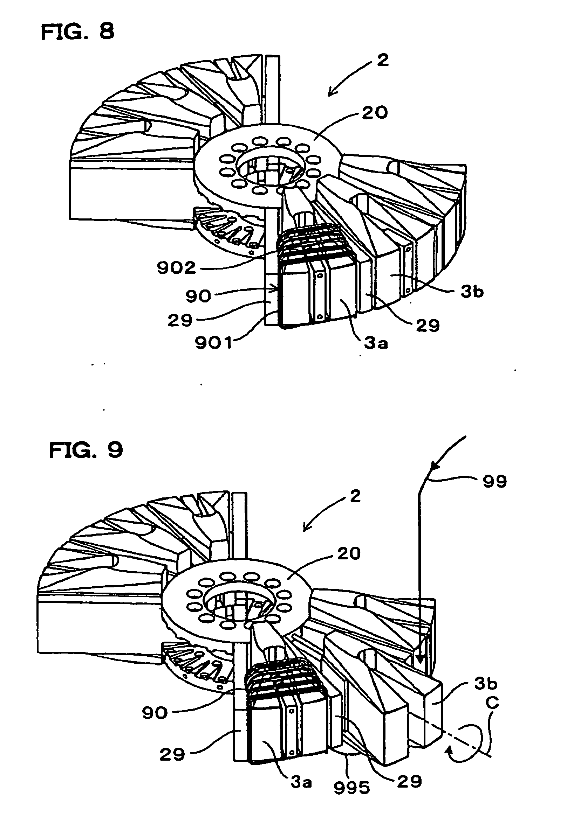

Next, a bobbin retracting step is performed, as shown in Fig. 8, to retract the first bobbin 3a having the single-pole coil 90. At this time, the bobbin 3a is fixed again at the back position by operating the positioning pins 38 (Fig. 15 to Fig. 17).

As shown in Fig. 8, the single-pole coil 90 formed around the bobbin 3a is exposed at its end portions 902, as located at the upper and lower portions of its loop, exposed to the front and back sides of the bobbin 3a, and is housed at its insertion portions 901, as located at the right and left portions, in the clearances between the separate plate 29 and the bobbin 3a.

Next, a second bobbin 3b adjoining the first bobbin 3a having the single-pole coil 90 is moved forward along the axis C and is protruded farther than the remaining bobbins 3, as shown in Fig. 9. The second bobbin 3b is then fixed like before at the fore position.

Before or after this bobbin protruding step, the engaging positions of the magazine 2 and the turning device 4 are changed to align the turning center of the turning device 4 and the axis of the second bobbin 3b.

As shown in Fig. 9, moreover, a crossover wire 995 leading from the single-pole coil 90 held by the first bobbin 3a is turned over below the second bobbin 3b, and the succeeding electric wire 99 is fed like before downward in one direction.

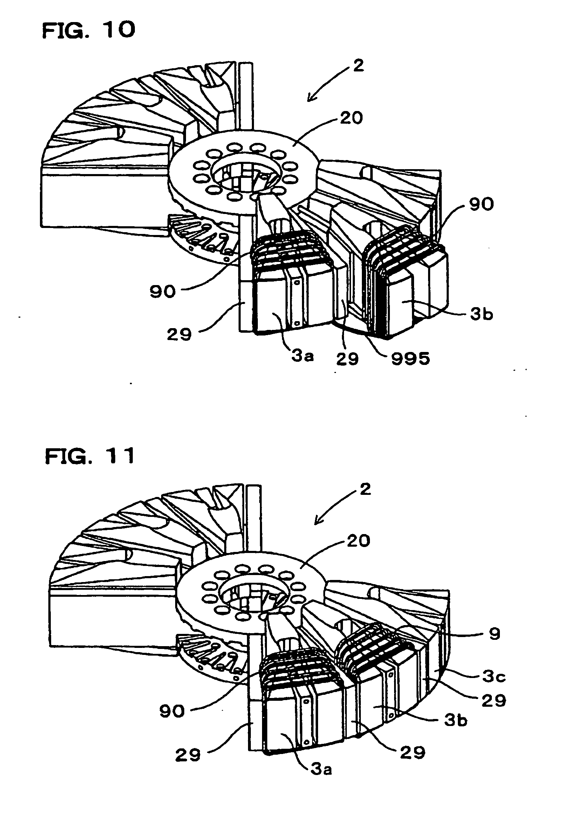

Next, the winding step is performed by feeding the electric wire 99 in one direction to the protrudedbobbin 3bandby turning the magazine 2 as a whole around the axis C of the bobbin 3b, as shown in Fig. 9 and Fig. 10. The turning direction at this time is reversed from that of the case of the first bobbin 3a. As a result, the electric wire 99 is wound on the protruded bobbin 3b, as shown in Fig. 10, to complete the formation of the second single-pole coil 90 in the winding direction reversed from that of the first single-pole coil 90.

Next, the second bobbin 3b having the single-pole coil 90 is movedbackward and is fixed like before at thebackposition, as shown in Fig. 11.

As shown in Fig. 11, the single-pole coil 90 formed around the bobbin 3b is also exposed at its end portions 902, as located at the upper and lower portions of its loop, exposed to the front and back sides of the bobbin 3b, and is housed at its insertion portions 901, as located at the right and left portions, in the clearances between the separate plate 29 and the bobbin 3b.

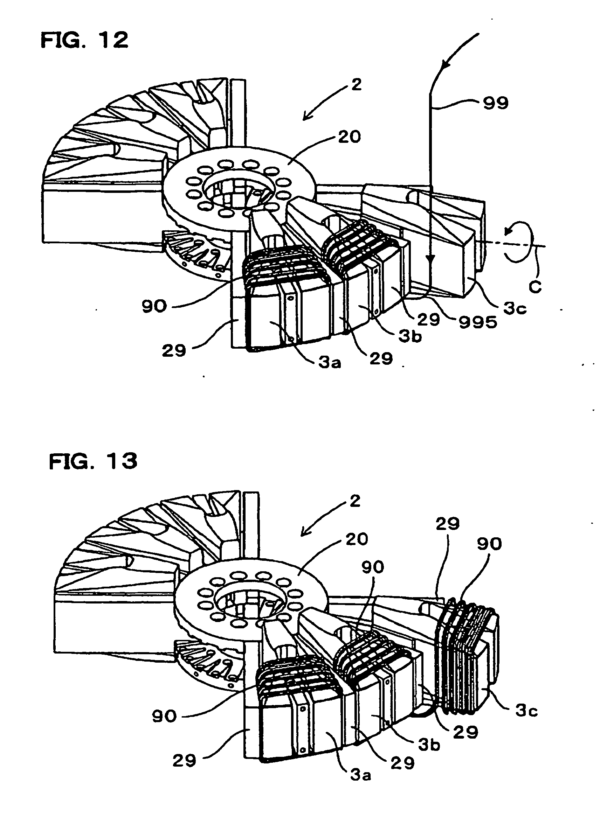

Next, a third bobbin 3c adjoining the second bobbin 3b is moved forward along the axis C and is protruded farther than the remaining bobbins 3, as shown in Fig. 12. The third bobbin 3c is then fixed like before at the fore position. In this case, too, before or after this bobbin protruding step, the engaging positions of the magazine 2 and the turning device 4 are changed to align the turning center C2 (in Fig. 1 and Fig. 2) of the turning device 4 and the axis C of the third bobbin 3c.

As shown in Fig. 12, moreover, the electric wire 99 subsequent to the crossover wire 995 extending from the single-pole coil 90 held by the second bobbin 3b is fed like before downward in one direction.

Next, the winding step is performed by feeding the electric wire 99 in one direction to the protruded bobbin 3c and by turning the magazine 2 as a whole around the axis C of the bobbin 3c, as shown in Fig. 12 and Fig. 13. The turning direction at this time is reversed from that of the case of the second bobbin 3b. As a result, the electric wire 99 is wound on the protruded bobbin 3c, as shown in Fig. 13, to complete the formation of the third single-pole coil 90 in the winding direction reversed from that of the second single-pole coil 90.

Next, the third bobbin 3c having the single-pole coil 90 is moved backward and is fixed like before at thebackposition, as shown in Fig. 14.

As shown in Fig. 14, the coil insertion portion 901 of the third single-pole coil 90 formed around the bobbin 3c is also housed in the clearances between the separate plate 29 and the bobbin 3.

As a result, the coil 9 is completed with the three single-pole coils 90 adjoining each other in the alternately reversed winding directions.

Next, three bobbins 3d to 3f, as opposed to the three bobbins 3a to 3c having the aforementioned coil 9, can also be subjected to a procedure like before thereby to form the coil 9, in which the three single-pole coils 90 adjoin each other in the alternately reversed winding directions, as shown in Fig. 14.

The magazine 2 in this embodiment is constructed to wind the electric wire 99 by protruding such one of the three bobbins 3 farther than the remaining two as to be wound. Moreover, the bobbins 3 can be individually protruded separately of the remaining ones. Still moreover, the bobbins 3 are so arranged in the base holder 20 that they may move without their axes C aligned.

Moreover, the magazine 2 is so constructed to wind the electric wire 99 that the axes C of the individual bobbins 3 are sequentially brought close to the turning center C2 of the magazine 2. Still moreover, the bobbins 3 are so arranged on the base holder 20 that a virtual line R joining the centers G of gravity of the bobbins 3 may form a generally circular shape and that the axes C of the individual bobbins 3 may be radial outward from the center O of the generally circular virtual line R (as referred to Fig. 1).

In this embodiment, moreover, the winding bobbin 3 to be wound was fed with the electric wire 99, and the magazine 2 was turned as a whole around the axis C of the bobbin 3 or around the line substantially parallel to the axis to wind the electric wire 99 on the bobbin 3 being protruded farther than the remaining bobbins 3, thereby to form the single-pole coils 90 so that the motor coil 9 could be formed. Moreover, the winding operation of the electric wire 99 could be performed by bringing the axis C of the bobbin 3 to be wound with the electric wire 99, sequentially close to the turning center C2 of the magazine 2.

The actions and effects of this embodiment will be described in the following.

In the coil forming method of this embodiment, there are used the magazine 2 of the structure composed of the base holder 20 and the bobbins 3, and the turning device 4. Moreover, the bobbin protruding step, the winding step and the bobbin retracting step are performed sequentially for the individual bobbins.

Here, the winding step isperformedby turning the magazine as a whole around the axis c of the protruded bobbin 3. Therefore, the electric wire 99 can be fed in one direction so that the single-pole coil 90 canbe formed on the bobbin 3 without twisting the electric wire 99.

Moreover, the winding step follows the bobbin protruding step and is followed by the bobbin retracting step. Specifically, the bobbin 3 to be subjected to the winding step can be changed by moving it forward and backward at the bobbin protruding step and at the bobbin retracting step. This makes it unnecessary to prepare any special space for feeding the electric wire between adjacent bobbins 3. This makes it possible to make the length of the crossover wire 995 sufficiently small between the single-pole coils 90 obtained.

In this embodiment, moreover, eachbobbin 3 of the magazine 2 is formed into the general sector shape and is provided with the shaping blocks 33 and 34 on its front face and back face. These shaping blocks 33 and 34 are made thicker inward. Therefore, the single-pole coil 90 wound on the bobbin 3 has its electric wire loops changed in shape along the axis C of the bobbin 3.

Specifically, the electric wire loops composing the single-pole coil 90 become wider outward along the sector-shaped bobbin 3 and lower along the shapes of the shaping blocks 33 and 34. As a result, the coil end portion 902 at the time when the coil is mounted in the stator core can be arranged in the optimum state, as will be described hereinafter.

In the winding magazine 2 of this embodiment, moreover, the contour formed of the distal ends of all the retracted bobbins 3 has the circular shape so that the individual bobbins 3 can be positioned to confront the inner circumference of the later-described stator core.

Between the two sides of each bobbin 3, moreover, there exist the separate plates 29, which are extended from the outer circumference of the base holder 20. The clearances between the separate plates 29 and the bobbin 3 function as coil retaining grooves 290. Here, these coil retaining grooves 290 adjoining across the separate plate 29 are substantially parallel to each other. Moreover, the individual single-pole coils 90 can be mounted on the stator core by the linear movements along those coil retaining grooves 290, as will be described in Embodiment 2.

### Embodiment 2

This embodiment presents one example of the method for inserting the motor coils formed by using the coil forming apparatus 1 of Embodiment 1, directly into the stator core from the magazine 2.

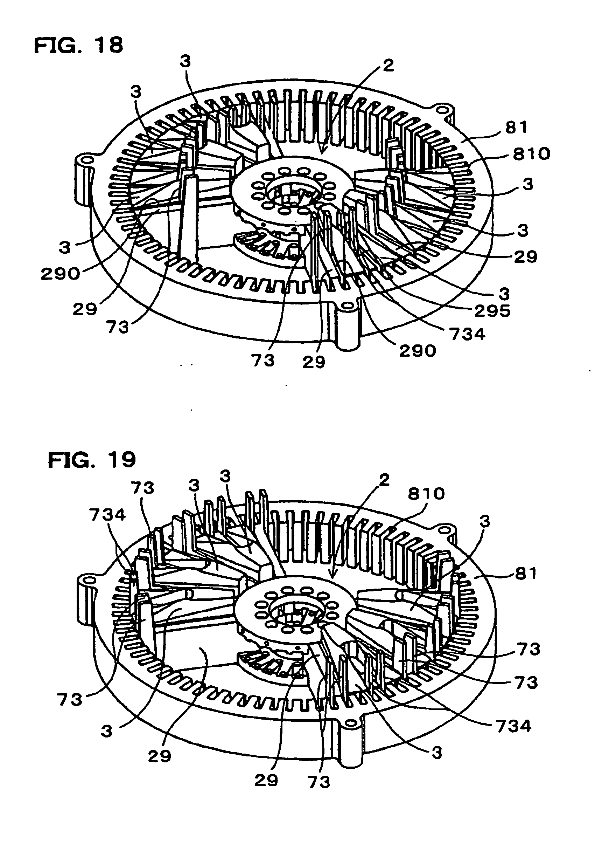

In this embodiment, the motor coils 9 (as referred to Fig. 14) are inserted and arranged in slots 810 formed in the inner circumference of a ring-shaped stator core 81, as shown in Fig. 18 and Fig. 19. Here in this embodiment, the motor coils 9 (or the single-pole coils 90) are omitted to clarify the motions of insertion blades 734 or the like, as will be described hereinafter.

The motor to be constructed of the stator core 81 is a three-phase DC brushless motor. Moreover, the stator core 81 in this embodiment is prepared by laminating ring-shaped electromagnetic steel sheets. The stator core 81 is provided in its inner circumference with the slots 810 for inserting the coils, as shown in Fig. 18 and Fig. 19.

In this embodiment, the stator core 81 is provided with the seventy two slots 810 for arranging the thirty six single-pole coils 90 in total. Moreover, the twelve single-pole coils 90 bear one pole individually. In this embodiment, two sets of motor coils 9 each having three adjoining single-pole coils 90 are prepared by one magazine 2 and are mounted together on the stator core 81. By performing these works six times, all the necessary single-pole coils 90 are mounted on the stator core 81.

These works are described in more detail. First of all, the magazine 2 is so arranged in the stator core 81, as shown in Fig. 18, that the coil retaining grooves 290 to be formed in the magazine 2 between the bobbin 3 and the separate plates 29 may confront the slots 810 of the stator core 81.

As shown in Fig. 18, moreover, insertion blades 73 are inserted into the coil retaining grooves 290 of the magazine 2. Still moreover, the cutouts 320, which are formed in the bobbin bodies 32 of the bobbins 3 in the magazine 2, and the cutouts 330 and 340, which are formed in the upper and lower shaping blocks 33 and 34 (as referred to Fig. 3), provide provisional shaping grooves 295 for inserting the provisional shaping blades 734.

As shown in Fig. 19, the insertion blades 73 are moved forward in the coil retaining grooves 290 from the center toward the outer circumference. Simultaneously with this, the provisional shaping blades 734 are moved forward in the provisional shaping grooves 295 from the center toward the outer circumference. As a result, the single-pole coils 90 are pushed by the insertion blades 73 to move substantially linearly from the coil retaining grooves 290 to the slots 810 of the stator core 81. Moreover, the upper and lower coil end portions 910 (Fig. 14), as having swelled out from the stator core 81, in the single-pole coils 90 are pushed and deformed outward or provisionally shaped by the provisionally shaping blades 734.

These forward motions of the insertion blades 73 and the provisionally shaping blades 734 are performed simultaneously for all the six single-pole coils 90 so that these six coils 90 are simultaneously inserted into the slots 810 of the stator core 81.

Next, in this embodiment, a pair of upper and lower tools (although not shown) are used to perform a second provisional shaping. The formers are formed into a ring shape having such a shaping face on the side to confront the stator core 81 as to shape the coils into a desired shape. Specifically, each of the upper and lower formers has such a tapered shaping face that its inner circumference protrudes toward the stator core 81. Moreover, the formers shape, when moved forward to the stator core 81, the motor coils 9 outward along the tapered shape of the shaping face.

On the other hand, the individual formers are provided with cutouts for preventing interference with the insertion blades 73 and the provisional shaping blades 734. Moreover, the formers can be pushed onto the stator core 81 while the insertion blades 73 and the provisional shaping blades 734 being moved forward.

The paired upper and lower formers thus constructed are individually moved forward from their upper and lower positions onto the stator core 81. As a result, the second provisional shaping is performed such that the coil end portions 902, as having swelled out from the upper and lower portions of the stator core 81, of the six single-pole coils 90 arranged in the stator core 81 may fall toward the stator core 81.

Next, in this embodiment, the coil forming apparatus 1 exemplified in Embodiment 1 is used to form two sets of motor coils 9 having the three adjoining single-pole coils 90 on the magazine 2. Then, the movement, provisional shaping and second provisional shaping of the motor coils 9 from the magazine 2 directly to the stator core 81 are performed like before. By repeating these works six times in total, the thirty six single-pole coils 90 in total are mounted on the stator core 81. Moreover, the final shaping to be performed as the second provisional one by the formers is carried out for all the thirty six single-pole coils 90 so that it is the proper one for shaping the motor coils as a whole.

Thus, the thirty six single-pole coils 90 in total are inserted and arranged in the stator core 81.

Here, the step of forming the six single-pole coils to the second provisional shaping step are performed in a series of works in this embodiment and are repeated six times. However, the efficiency could be enhanced by using a plurality of sets of magazines 2. By increasing the number of the bobbins 3 in the magazine 2 from six to twelve, moreover, the twelve single-pole coils 90 could also be transferred all at once to the stator core 81 thereby to rationalize the process.

In this embodiment, as has been described hereinbefore, the so-called "linear insertion method" of moving the coils linearly can be executed easily and stably by utilizing the magazine 2 and the insertion blades 73 thus far described. In short, the single-pole coils 90 can be linearly inserted into the slots 810 without any position change. This makes it unnecessary to make the vertical length of the motor coils 9 more than necessary.

In this embodiment, moreover, the motor coil can be transferred directly from the bobbins 3 having formed it to the stator core 81, as described above. After the coils were formed, moreover, they need not be transferred from the bobbins to another coil transfer machine so that the coils can be mounted remarkably efficiently on the stator core. This is because the magazine 2 has an excellent structure, as has been described in detail in connection with Embodiment 1.

Moreover, the motor coils can be inserted from the magazine 2 directly into the stator core 81 so that the coil transfer can be easily executed even if the crossover wires joining the single-pole coils 90 are short.

### Embodiment 3

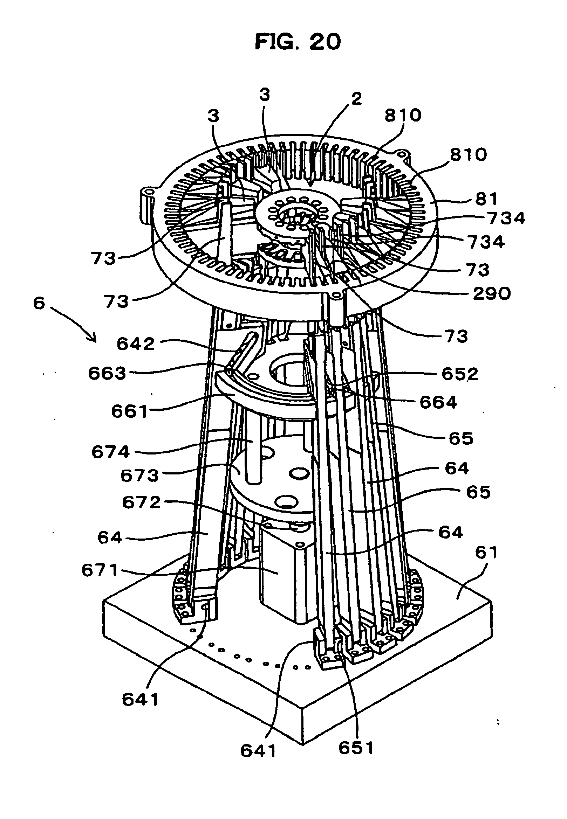

As shown in Fig. 20 to Fig. 22, Embodiment 2 presents a detailed example of a coil inserting apparatus to be used when the coils are to be inserted from the magazine 2 into the stator core 81.

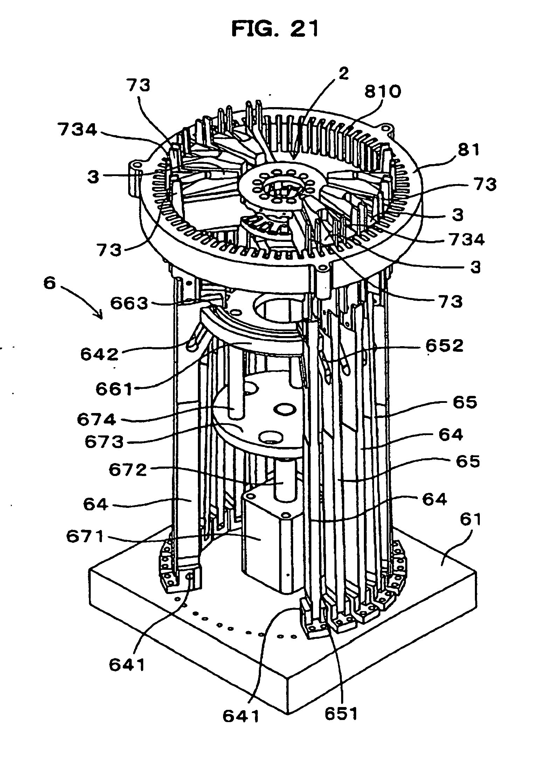

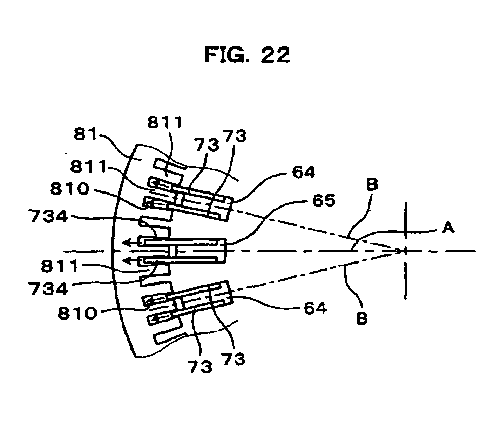

The coil inserting apparatus 6 is provided on a bottom plate 61, as shown in Fig. 20 and Fig. 21, with a plurality of first arms 64 arranged to rock on fulcrums 641, and a plurality of second arms 65 arranged to rock on fulcrums 651. As shown in Fig. 20 and Fig. 22, each first arm 64 carries the two insertion blades 73 at its upper end, and each second arm 65 carries the two provisional shaping blades 734 at its upper end.

The first arm 64 is provided with a slot 642, which can engage with a pin 663 embedded on a lifting plate 661. The second arm 65 is also provided with a slot 652, which can engage with a pin 664 embedded on the lifting plate 661.

Moreover, this lifting plate 661 is connected to a cylinder 671, a lifting rod 672, a base plate 673, a connecting rod 674 and so on, which are arranged over the bottom plate 61. Thus, the lifting plate 661 can be moved upward and downward as the lifting rod 672 driven by the cylinder 671 moves upward and downward.

On the other hand, the slots 642 and 652 formed in the first arms 64 and the second arms 65 are provided with slope slot portions. As the engagements between the pins 663 and 664 and the slots 642 and 643 come out of position as the pins 663 and 664 move vertically, the first arms 64 and the second arms 65 rock on the fulcrums 641 and 651. Here, the slots 642 of the first arms 64 and the slots 652 of the second arms 65 are so slightly modified in shape that the first arms 64 and the second arms 65 are given different rocking strokes.

As shown in Fig. 22, moreover, the two insertion blades 73 are arranged in parallel at each first arm 64 so that they move together in parallel with the rocking direction of the first arm 64. Here, the rocking directions of all the first arms 64 are along the radial directions A extending through the centers of teeth 811, which are positions between the two slots 810 of the stator core 81.

Likewise, the two provisional shaping blades 734 are arranged in parallel at each second arm 65 so that they move together in parallel with the rocking direction of the second arm 65. Here, the rocking directions of all the second arms 65 are along the radial directions B extending through the centers of teeth 811, which are positioned between the two slots 810 of the stator core 81.

By using the coil inserting apparatus 6 having the construction thus far described, the linear transfers of the coils 9 (or the single-pole coils 90) directly from the magazine 2 to the stator core 81 can be easily realized. Therefore, the aforementioned actions and effects can be reliably manifested.

### Embodiment 4

This embodiment uses the aforementioned magazine 2 to form the motor coil 9 to be used in a stator of a concentrated winding type.

The foregoing Embodiments 1 to 3 manufacture the stator of distributed winding type, in which the single-pole coils 90 wound with the electric wire 99 are distributed and arranged at the two or more slots 810 in the stator core 81. Moreover, the magazine 2 forms the coils 9 to be used in the stator of the distributed winding type.

In this embodiment, the coils 9 are formed like Embodiment 1 to manufacture the stator of the concentrated winding type, in which the single-pole coils 90 wound with the electric wire 99 are individually arranged in the teeth 811 positioned between the individual slots 810 of the stator core 81.

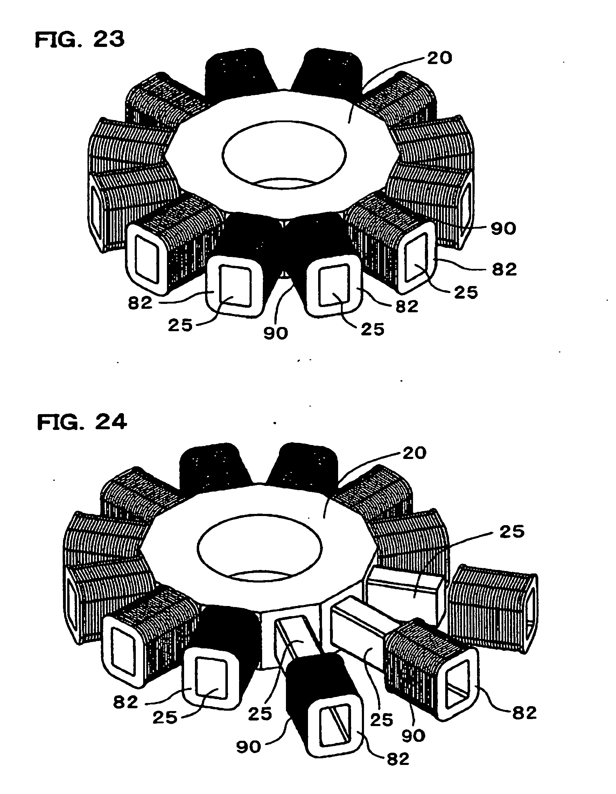

In this embodiment, as shown in Fig. 23 and Fig. 24, the magazine 2 is provided with a plurality of projections 25, which are formed on the outer circumference of the base holder 20. A plurality of single-pole coil forming bobbins 82 are mounted as the bobbins 3 on those projections 25.

Like before, the magazine 2 is turned in its entirety around the axis C of the bobbin 82 in the winding operation, as shown in Fig. 23, to form the single-pole coils 90 on each bobbin 82. After this, as shown in Fig. 24, the bobbin 82 having the single-pole coils 90 formed thereon is removed from the base holder 20 and is assembled with the teeth 811 of the stator core 81 so that the stator of the concentrated winding type can be manufactured.

### Embodiments 5 and 6

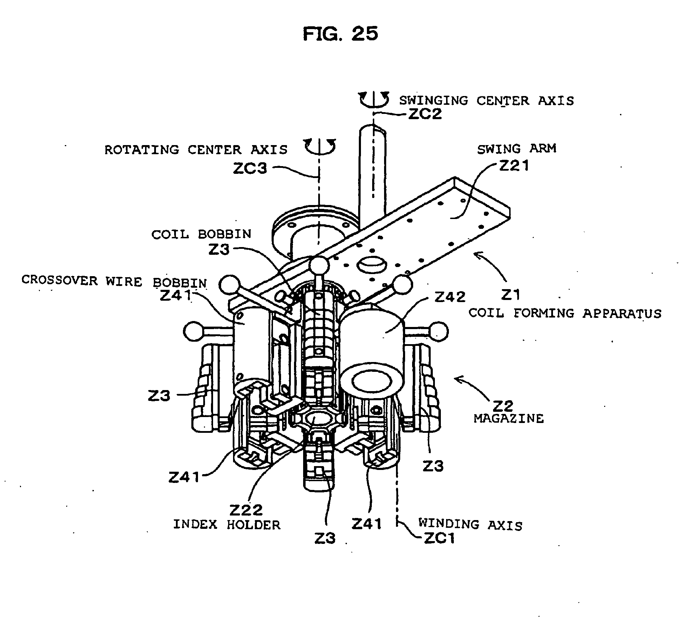

With reference to Fig. 25 to Fig. 35, Embodiment 5 will be described in connection with a coil forming apparatus Z1 for forming a continuous-pole coil Z9, and a coil forming process for forming the continuous-pole coil Z9 from an electric wire Z99.

With reference to Fig. 36 to Fig. 44, on the other hand, Embodiment 6 will be described in connection with a coil forming/inserting apparatus Z5 provided with a bobbin Z2 and an inserter jig Z6, and further in connection with a coil transfer step of transferring the continuous-pole coil Z9 retained in the magazine Z2, once to the inserter jig Z6, and a coil inserting step of inserting and arranging the continuous-pole coil Z9 from the inserter jig Z6 in the individual slots Z810 of a stator core Z81.

Moreover, Embodiment 5 will be described on the coil forming apparatus and the coil forming method, and Embodiment 6 will be described on the coil forming/inserting apparatus and the coil forming/inserting method.

On the other hand, the magazine Z2 to be used in Embodiment 6 is identical to the magazine Z2 used in Embodiment 5, and Embodiment 6 may be described with reference to any of Fig. 25 to Fig. 35.

Here in Embodiments 5 and 6, the bobbin 3 in Embodiment 1 corresponds to a coil bobbin Z3. Moreover, the axis C of the bobbin 3 in Embodiment 1 corresponds to the winding axis ZC1 of the coil bobbin Z3. Still moreover, the base holder 20 in Embodiment 1 corresponds to an index holder Z22. Furthermore, the motor coil 9 in Embodiment 1 corresponds to the continuous-pole coil Z9.

On the other hand, the turning device in Embodiment 1 corresponds to a swing device and a swing arm Z21. Moreover, the turning center C2 of the turning device in Embodiment 1 corresponds to the swinging center axis ZC2 of the swing arm Z21.

### Embodiment 5

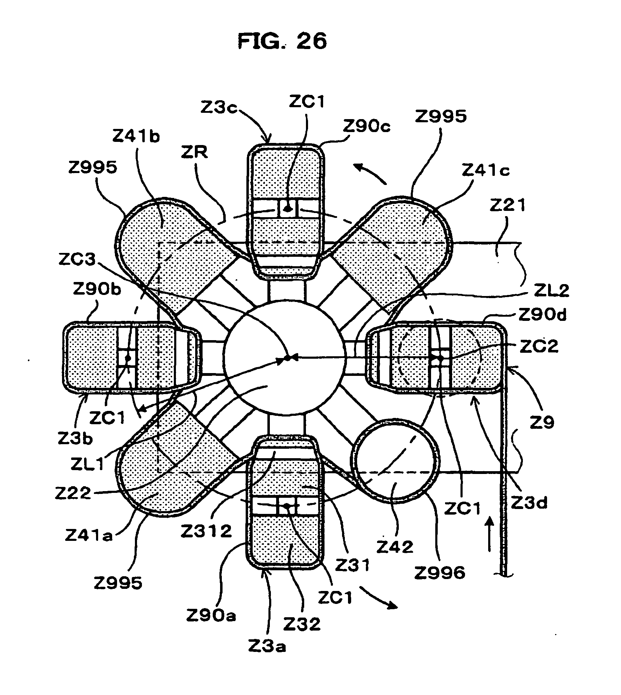

As shown in Fig. 25 and Fig. 26, the coil forming apparatus Z1 of this embodiment forms the continuous-pole coil Z9 as a motor coil by continuously arranging a plurality of single-pole coils Z90 having the electric wire Z99 wound thereon in a loop shape. The coil forming apparatus Z1 is provided with: the (not-shown) frame; the swing arm Z21 arranged on the frame to swing around the swinging center axis ZC2 connected to the (not-shown) swinging device; and the magazine Z2. Moreover, this magazine Z2 is provided with the index holder Z22 arranged movably with respect to the swing arm Z21, and a plurality of coil bobbins Z3 arranged on the outer circumference of the index holder Z22.

On the other hand, the individual winding axes ZC1 of the individual coil bobbins Z3 for winding the electric wire Z99 are substantially parallel not only to each other but also to the swinging center axis ZC2. Moreover, the coil forming apparatus Z1 is constructed to move the index holder Z22 thereby to bring the coil bobbins Z3 for winding the electric wire Z99, sequentially close to the swinging center axis ZC2.

This construction will be described in detail in the following.

Here in the magazine 2 of Embodiment 1, the index holder Z22 can rotate around the center axis of rotation ZC2, which is substantially perpendicular to the swinging center axis ZC2. The individual coil bobbins Z3 are so arranged on the index holder Z22 that the individual winding axes ZC1 for winding the electric wire Z99 are directed normal to the rotating center axis ZC2. By rotating the index holder Z22, the directions of the winding axes ZC1 of the coil bobbins Z3 for winding the electric wire Z99 can be sequentially brought into substantial alignment with the direction of the swinging center axis ZC2.

As shown in Fig. 25 and Fig. 26, the index holder Z22 is arranged to rotate around a rotating center axis ZC3 offset substantially in parallel with the swinging center axis ZC2 and rotably provided to the swing arm Z21. On the other hand, the individual coil bobbins Z3 are arranged so arcuately in the index holder Z22 as are at substantially equal distances from the rotating center axis ZC3.

On the other hand, a bobbin distance ZL1 from the rotating center axis ZC3 to the winding axis ZC1 in each of the coil bobbins Z3 is substantially equal to an offset distance ZL2 from the swinging center axis ZC2 of the swing arm Z21 to the rotating center axis ZC3 of the index holder Z22.

By rotating the index holder Z22 by a predetermined angle with respect to the swing arm Z21, moreover, the winding axes ZC1 of the coil bobbins Z3 for winding the electric wire Z99 can be sequentially aligned substantially with the swinging center axis ZC2. In this substantially aligned state, the electric wire Z99 can be wound.

Moreover, the continuous-pole coil Z9 having the arcuately continuous coils can be formed (as referred to Fig. 35) can be formed by the individual coil bobbins Z3 arranged in the arcuate shape.

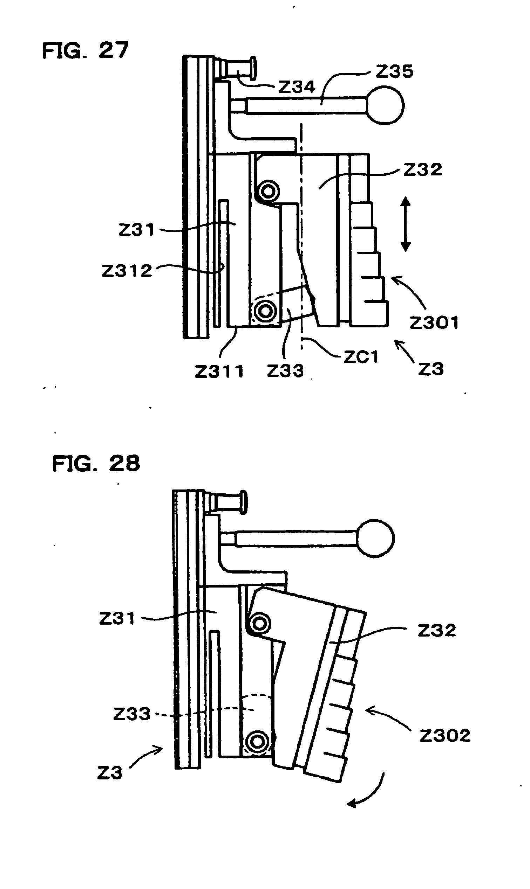

As shown in Fig. 27, moreover, each coil bobbin Z3 is arranged to move toward and away from the swinging center axis ZC2 with respect to the index holder Z22. Moreover, the coil bobbin Z3 for winding the electric wire Z99 can be moved forward away from the swing arm Z21 with respect to the remaining coil bobbins Z3 so that it can be protruded from the remaining coil bobbins Z3. Therefore, the protruded coil bobbin Z3 can be easily fed with the electric wire Z99 in the direction perpendicular to the winding axis ZC1 thereby to facilitate the feed of the electric wire Z99 and the winding of the electric wire Z99 on the coil bobbin Z3.

As shown in Fig. 26, moreover, the individual coil bobbins Z3 are arranged in the arcuate shape on the outer circumference of the index holder Z22. In this embodiment, the individual coil bobbins Z3 are radially arranged at substantially equal spacings on the outer circumference of the index holder Z22. In this embodiment, moreover, the four coil bobbins Z3 are so arranged as to form the continuous-pole coil Z9 having the four continuous single-pole coils Z90.

As shown in Fig. 27 and Fig. 28, on the other hand, each coil bobbin Z3 is provided with an inner bobbin portion Z31 attached to the index holder Z22, and an outer bobbin portion Z32 arranged to confront the inner bobbin portion Z31. The outer bobbin portion Z32 can move to change the distance from the inner bobbin portion Z31 between a winding position Z301 at the time of winding the electric wire Z99, as shown in Fig. 27, and a releasing position Z302 at the time of releasing the single-pole coil Z90 after wound from the relevant coil bobbin Z3, as shown in Fig. 28. Moreover, the outer bobbin portion Z32 is diametrically enlarged stepwise in the forward direction away from the swing arm Z21.

When the outer bobbin portion Z32 is set at the winding position Z301, as shown in Fig. 27, it is possible to establish the state, in which the external diameter of the coil bobbin Z3 is stepwise enlarged in the forward direction. It is also possible to form the single-pole coil Z90 having the winding diameter of the electric wire Z99 enlarged in the forward direction, and to form the single-pole coil Z90 having a winding diameter of the normal size which is determined by the distance between the outer bobbin portion Z32 and the inner bobbin portion Z31.

Moreover, the continuous-pole coil Z9 composed of the individual single-pole coils Z90 can be inserted and arranged in the slots Z810 of the stator core Z81 such that its side of the larger winding diameter is positioned on the opening sides of the slots Z810 for the insertion and arrangement. Moreover, the coil end portions formed by the protrusions of the individual single-pole coils Z90 from the two axial end portions of the stator core Z81 can be made small by moving and deforming the positions on the opening sides outward of the stator core Z81. In other words, the individual single-pole coils Z90 are formed to have winding diameters enlarged from one side to the other side, so that the length of the single-pole coils Z90 can be brought to the necessary minimum to reduce the coil end portions.

When the outer bobbin portion Z32 is set at the releasing position Z302, as shown in Fig. 28, it is possible to establish the state, in which the external diameter of the coil bobbin Z3 is smaller in the forward direction. Moreover, the distance between the outer bobbin portion Z32 and the inner bobbin portion Z31 is reduced so that each single-pole coil Z90 can be easily released.

In this embodiment, as shown in Fig. 27 and Fig. 28, each coil bobbin Z3 is provided with a handle Z35, which is manually moved forward or backward so that the coil bobbin Z3 is fixed at the fore or back position. In addition, the forward or backward movement of each coil bobbin Z3 can also be performed by using a cylinder or motor.

In this embodiment, moreover, each coil bobbin Z3 is provided with a turnable cam Z33 at its inner bobbin portion Z31. The winding position Z301 is established when the cam Z33 is turned up toward the outer bobbin portion Z32, as shown in Fig. 27, and the releasing position Z302 is established when the cam Z33 is turned down toward the inner bobbin portion Z31, as shown in Fig. 28. In addition, the movement of the outer bobbin portion Z32 between the winding position Z301 and the releasing position Z302 can also be performed by using a cylinder or motor.

As shown in Fig. 25 and Fig. 26, on the other hand, the index holder Z22 is provided between the individual coil bobbins Z3 with crossover bobbins Z41 for winding crossover wires Z995 to join the individual single-pole coils Z90. In this embodiment, three crossover bobbins Z41 are individually arranged between the four coil bobbins Z3. By winding the electric wire Z99 around the crossover bobbins Z41, moreover, the crossover wires Z995 of a specified length can be formed (as referred to Fig. 35) between the single-pole coils Z90 formed around the coil bobbins Z3.

In this embodiment, as shown in Fig. 25 and Fig. 26, a lead bobbin Z42 is arranged between a first coil bobbin Z3a for winding the electric wire Z99 at first and a fourth coil bobbin Z3d for winding at last. The lead bobbin Z42 is provided for winding the electric wire Z99 to retain a lead wire Z996 of a predetermined length before the winding operation of the first coil bobbin Z3a. The lead wire Z996 means the electric wire Z99 leading to the winding end portion of a first single-pole coil Z90a to be formed in the first coil bobbin Z3a (as referred to Fig. 35).

In this embodiment, moreover, the lead bobbin Z42 has a generally circular section shape so that it can retain the lead wire Z996 of the predetermined length stably on the winding end portion of the first single-coil Z90a without folding or bending the electric wire Z99.

Like the aforementioned coil bobbins Z3, moreover, the crossover bobbins Z41 and the lead bobbin Z42 can also move forward to or backward from the swinging center axis ZC2 with respect to the index holder Z22. Therefore, the crossover bobbins Z41 and the lead bobbin Z42 can move in the forward direction away from the swing arm Z21 relative to the remaining coil bobbins Z3 and crossover bobbins Z41 so that they can protrude farther than the remaining coil bobbins Z3 and crossover bobbins Z41.

As shown in Fig. 25 and Fig. 26, the swing arm Z21 can swing both forward and backward around the swinging center axis ZC2. Moreover, this embodiment forms the continuous-pole coil Z9 having the four single-pole coils Z90 wound in the same direction. Therefore, the swinging directions of the swing arm Z21 for winding the coil bobbins Z3 and for winding the crossover bobbins Z41 are reversed, and the coil forming apparatus Z1 rotates alternately both forward and backward to form the continuous-pole coil Z9.

In the following, the swinging direction of the swing arm Z21 for winding the coil bobbins Z3 will be called "forward", and the swinging direction of the swing arm z21 for winding the crossover bobbins Z41 and the lead bobbin Z42 will be called "backward".

On the frame, although not shown, there is arranged the swinging device for swinging the swing arm Z21 around its swinging center axis ZC2. This swinging center axis ZC2 is connected to the swinging device. In this embodiment, the swinging device can be manually swung by equipping the swing arm Z21 with a handle. In addition, the swinging device can also be exemplified by a variety of motors or index cylinders, which are actuated electrically, hydraulically or pneumatically.

Here will be described a coil forming process for forming the continuous-pole coil Z9 by using the coil forming apparatus Z1 thus far described.

In this coil forming process, the coil forming apparatus Z1 is used to perform the following index step, protruding step and winding step sequentially on the individual coil bobbins Z3 to form the single-pole coils Z90 and then the continuous-pole coil Z9 having the continuous single-pole coils Z90.

In the coil forming apparatus Z1, as shown in Fig. 25, at the initial position of the index holder Z22, the lead bobbin Z42 takes the position, at which it is the closest to the swinging center axis ZC2 in the swing arm Z21. At this initial position, the winding axis ZC1 in the lead bobbin Z42 is substantially aligned with the swinging center axis ZC2 in the swing arm Z21.

At a pretreatment step, the lead bobbin Z42 is formed forward to protrude farther than the individual coil bobbins Z3 and the individual crossover bobbins Z41. Then, the lead bobbin Z42 is fed with the electric wire Z99, and the swing arm Z21 is swung backward so that the lead bobbin Z42 is wound with the electric wire Z99 thereby to form the lead wire Z996 of the predetermined length.

The feedof the electric wire Z99 is performed transversely for the coil forming apparatus Z1, that is, in the direction normal to the winding faces of the individual coil bobbins Z3, the individual crossover bobbins Z41 and the lead bobbin Z42 for winding the electric wire Z99.

Next, at the aforementioned index step, as shown in Fig. 29, the index holder Z22 is rotated by a predetermined angle to bring the winding axis ZC1 of the first coil bobbin Z3a into substantial alignment with the swinging center axis ZC2.

At the aforementioned protruding step, moreover, the first coil bobbin Z3a is moved forward to protrude, and the lead bobbin Z42 is moved backward.

As shown in Fig. 30, on the other hand, at the aforementioned winding step, the first coil bobbin Z3a is fed with the electric wire Z99, and the swing arm Z21 is swung forward so that the first coil bobbin Z3a is wound with a plurality of turns of the electric wire Z99 thereby to form the first single-pole coil Z90a. On the other hand, the outer bobbin portion Z32 of the first coil bobbin Z3a takes the aforementioned winding position Z301 so that the external diameter of the first coil bobbin Z3a is stepwise enlarged in the forward direction. Thus, it is possible to form the single-pole coil Z90 having a winding diameter of the electric wire Z99 enlarged in the forward direction.

Next, as shown in Fig. 31, the index step is performed again to rotate the index holder Z22 by a predetermined angle to bring the winding axis ZC1 of a first crossover bobbin Z41a into substantial alignment with the swinging center axis ZC2. At the protruding step, moreover, the first crossover bobbin 42a is moved forward to protrude, and the first coil bobbin Z3a is moved backward.

Next at the crossover wire forming step, the first crossover bobbin Z41a is fed with the electric wire Z99, and the swing arm Z21 is swung backward so that the first crossover bobbin Z41a is wound with the electric wire Z99 to form the crossover wire Z995.

Next, as shown in Fig. 32, the aforementioned index step is performed again to rotate the index holder Z22 by a predetermined angle to bring the winding axis ZC1 of the second coil bobbin Z3b into substantial alignment with the swinging center axis ZC2. At the protruding step, moreover, the second coil bobbin Z3b is moved forward to protrude, and the first crossover bobbin Z41a is moved backward.

As shown in Fig. 33, moreover, the aforementioned winding step is performed again to feed the second coil bobbin Z3b with the electric wire Z99, and the swing arm Z21 is swung forward so that the second coil bobbin Z3b is wound with a plurality of turns of the electric wire Z99 thereby to form a second single-pole coil Z90b.

From now on, as shown in Fig. 34, a second crossover bobbin Z41b and a third crossover bobbin Z41c are subjected like before to the aforementioned index step, protruding step and crossover wire forming step thereby to form the individual crossover wires Z995. A third coil bobbin Z3c and the fourth coil bobbin Z3d are also subjected to the aforementioned index step, protruding step and winding step thereby to form a third single-pole coil Z90c and a fourth single-pole coil Z90d.

Thus, the continuous-pole coil Z9 is formed to have the first to fourth single-pole coils Z90a to Z90d continued by the individual crossover wires Z995, as shown in Fig. 35. This treatment of the crossover wires Z995 is performed not by the operation to grip the electric wire with an external device but only in the treatment of the magazine Z2. During the treatment, the coils are wound around and restricted by the individual bobbins Z3a to Z3d, Z41a to Z41d and Z42 till all the poles are wound up. Fig. 35 is a diagram schematically showing the state, in which the individual single-pole coils Z90a to Z90d are formed around the first to fourth coil bobbins Z3a to Z3d, and in which the continuous-pole coil Z9 is formed all over the individual bobbins Z3a to Z3d, Z41a to Z41d and Z42. As seen with reference to Fig. 35 and Fig. 26, the individual bobbins Z3a to Z3d, Z41a to Z41d and Z42 are arranged such that the virtual line joining their centers of gravity may be generally circular. Therefore, the crossover wires are treatedwi thin the range contained by the individual coil bobbins Z3a to Z3d, namely, in the circumcircle of the individual coil bobbins Z3a to Z3d by arranging these coil bobbins Z3a to Z3d circumferentially adjacent to each other at like diametrical positions with respect to the index holder Z22 of the magazine Z2.

In this embodiment, like Embodiment 1, the magazine 2 is constructed to wind the electric wire 99 such that any coil bobbin 3 for the winding operation is protruded farther than the remaining coil bobbins 3, as shown in Fig. 25.

As shown in Fig. 26, on the other hand, the individual coil bobbins Z3 are so arranged with respect to the index holder Z22 that the virtual line ZR joining their individual winding axes ZC1 may be generally circular. Moreover, the bobbins Z3 are so arranged on the index holder Z22 that their individual winding axes ZC1 may be substantially parallel to each other.

In this embodiment, like Embodiment 1, the coil bobbin Z3 forwindingwas fed with the electric wire Z99, and the magazine 2 was turned as a whole either around the winding axis ZC1 as the axis of the coil bobbin Z3 or around the line substantially parallel to the winding axis ZC1 to wind the electric wire Z99 on the coil bobbin Z3 being protruded farther than the remaining bobbins Z3, thereby to form the single-pole coils Z90 so that the continuous-pole coil Z9 could be formed as the motor coil 9. Moreover, the winding operation of the electric wire Z99 could be performed by bringing the winding axis ZC1 of the coil bobbin Z3 to be wound with the electric wire Z99, sequentially close to the swinging center axis ZC2 as the turning center of the magazine 2.

In the coil forming apparatus Z1, the coil bobbins Z3 are swung altogether by the swing arm Z21 so that the coil bobbin Z3 brought the closest to the swinging center axis ZC2 is wound with the electric wire Z99 thereby to form the single-pole coil Z90.

By swinging the swing arm Z21, moreover, the index holder Z22 and the coil bobbins Z3 carried on the swing arm Z21 are rotated altogether to wind the electric wire Z99. As a result, unlike the prior art, in which the electric wire Z99 is wound while the winder or the like is being rotated from the outer circumference of the bobbin fixed, the single-pole coil Z90 can be formed on the bobbin Z3 without substantially twisting the electric wire 99.

By rotating the index holder Z22, moreover, the winding axes ZC1 of the coil bobbins Z3 for winding the electric wire Z99 can be sequentially brought into substantial alignment with the swinging center axis ZC2 of the swing arm Z21. Although the coil forming apparatus Z1 is provided with the plurality of coil bobbins Z3 for forming the continuous-pole coil Z9, therefore, the electric wire Z99 can be wound such that the coil bobbin Z3 for the winding operation is not seriously offset from the swinging center axis ZC2.

After the single-pole coil Z90 was formed on any coil bobbin Z3, the index holder Z22 can be rotated to form the single-pole coil Z90 like before such that the winding axis ZC1 of the next coil bobbin Z3 adjacent to that coil bobbin Z3 is substantially aligned with the swinging center axis ZC2.

As a result, the feed of the electric wire Z99 can be performed substantially in a predetermined direction perpendicular to the winding axis ZC1 of the coil bobbin Z3 for the winding operation, so that the electric wire Z99 can be stably wound on each coil bobbin Z3. Therefore, the single-pole coil Z90 having little twist can also be stably formed around any coil bobbin Z3, thereby to form the continuous-pole coil Z9 having little twist stably.

### Embodiment 6

As shown in Fig. 37, the coil forming/inserting apparatus Z5 of this embodiment is provided with: the magazine Z2 for forming the continuous-pole coil Z9 having the single-pole coils Z90 wound with the electric wire Z99 in the loop shape; and the inserter jig Z6 confronting the magazine Z2 for accepting the continuous-pole coil Z9 and inserting and arranging the continuous-pole coil Z9 in the slots Z810 formed in the inner circumference of the stator core Z81.

As shown in Fig. 36, the magazine Z2 is provided with the plurality of coil bobbins Z3, and the inserter jig Z6 is provided with a plurality of coil accepting portions Z62 for accepting the individual single-pole coils Z90 from the individual coil bobbins Z3.

As shown in Fig. 40, moreover, the coil forming/inserting apparatus Z5 is constructed to arrange the individual coil bobbins Z3 to confront the coil accepting portion Z62 so that the continuous-pole coil Z9 having the individual single-pole coils Z90 wound on the individual coil bobbins Z3 may be transferred from the magazine Z2 to the inserter jig Z6.

This construction will be described in detail in the following.

In the magazine Z2, as shown in Fig. 25 and Fig. 26, the coil bobbins Z3 for winding the electric wire Z99 to form the single-pole coils Z90 are arranged at substantially equal distances from the center point of the magazine Z2. In this magazine Z2, moreover, the individual winding axes ZC1 of the coil bobbins Z3 for winding the electric wire Z99 are arranged substantially parallel to each other.

As shown in Fig. 36 and Fig. 37, on the other hand, the inserter jig Z6 is provided with a push/insertion core Z61 for pushing and inserting the continuous-pole coil Z9 into the slots Z810 of the stator core Z81. Moreover, the coil accepting portion Z62 is arranged on the outer circumference of the push/insertion core Z61 for accepting the individual single-pole coils Z90 from the individual coil bobbins Z3.

In the coil forming/inserting device Z5, as shown in Fig. 36 and Fig. 38, each coil accepting portion Z62 is positioned to confront the distal end face Z311 of each coil bobbin Z3 in the direction of the winding axis ZC1, when the continuous-pole coil Z9 is to be transferred from the magazine Z2 to the inserter jig Z6. The coil bobbin Z3 and the coil accepting portion Z62 are connected to form a transfer route Z60 for transferring each single-pole coil Z90.

As shown in Fig. 27 and Fig. 36, moreover, each coil bobbin Z3 is provided in its distance end face 311 with a fitting recess Z312 for fitting the distal end Z621 of each coil accepting portion Z62 in the inserter jig Z6. In this embodiment, the fitting recess Z312 is formed in the distal end face Z311 of each inner bobbin portion Z31 of each coil bobbin Z3.

As shown in Fig. 38, moreover, the fitting recess Z312 is made so deep as to insert and arrange the coil accepting portion Z62 in the entirety of the loops of the single-pole coil Z90 wound around the coil bobbin Z3. Specifically, the fitting recess Z312 is made deeper from the distal end face Z311 of each coil bobbin Z3 than the winding depth from the distal end face Z311 of each coil bobbin Z3 to the position for winding the electric wire Z99.

As shown in Fig. 36 and Fig. 38, moreover, the connection between each coil bobbin Z3 and each coil accepting portion Z62 can be made by fitting the distal end portion Z621 of each coil accepting portion Z62 in the fitting recess Z312 of each coil bobbin Z3. On the other hand, the transfer of the continuous-pole coil Z9 from the magazine Z2 to the inserter jig Z6 can be performed in that fitting state.

When this fitting is done, moreover, the distal endportion Z621 of each coil accepting portion Z62 is necessarily inserted and arranged in the loops of each single-pole coil Z90 in each coil bobbin Z3.

As shown in Fig. 36 and Fig. 37, moreover, the magazine Z2 is provided with a push-out core Z23, which is so arranged in the inner circumference of each coil bobbin Z3 as to move forward and backward thereby to push out the continuous-pole coil Z9 to the inserter jig Z6. This push-out core Z23 can push out, when moved forward (i.e., in the forward direction away from the swing arm Z21) to the side to confront the inserter jig Z6, each single-pole coil Z90 transferred to each coil accepting portion Z62, to a predetermined position in the inserter jig Z6, as shown in Fig. 40.

In this embodiment, as shown in Fig. 42, the predetermined position regulates the position of the continuous-pole coil Z9 when this continuous-pole coil Z9 is inserted and arranged in the slots Z810 of the stator core Z81 by the inserter jig Z6. After the continuous-pole coil Z9 was transferred to the inserter jig Z6, therefore, it can be inserted and arranged as it is in the slots Z810 of the stator core Z81.

As shown in Fig. 36, moreover, the inserter jig Z6 is provided with a plurality of guides Z63, which are so arranged between the individual coil accepting portions Z62 as are directed substantially in the same direction as the forming direction of the coil accepting portions Z62. As shown in Fig. 43, those guides Z63 confront teeth Z811 positioned between the individual slots Z810 of the stator core Z81 thereby to guide the insertion and arrangement of the continuous-pole coil Z9 in the individual slots Z810.

Between each guide Z63 and the individual coil accepting portions Z62 adjoining the two sides of the guide Z63, as shown in Fig. 36, there are formed insertion clearances Z64, into which the electric wires Z99 of the individual single-pole coils Z90 can be inserted. Each single-pole coil Z90 is prevented, when its electric wire Z99 is inserted into the insertion clearances Z64 and arranged in each coil accepting portion Z62, from being interlaced with the electric wire Z99 of the adjoining single-pole coil Z90. As a result, the electric wire Z99 of each single-pole coil Z90 can be reliably inserted and arranged in the slots Z810 of the stator core Z81.

As shown in Fig. 44, moreover, the push/insertion core Z61 can move toward and away from the individual coil accepting portions Z62. When the individual coil accepting portions Z62 and the individual guides Z63 are made to confront the inner circumference of the stator core Z81, the push/insertion core z61 moves forward to the stator core Z81 so that the single-pole coils Z90 held in the individual coil accepting portions z62 can be inserted and arranged in the individual slots Z810.

Here will be described the coil forming/inserting method, which performs: the coil transfer step of transferring the continuous-polecoil Z9 formed at the coil forming step explained in Embodiment 5, once to the inserter jig Z6; and the coil inserting step of inserting and arranging the continuous-pole coil Z9 from the inserter jig Z6 in the individual slots Z810 of the stator core Z81.

In this embodiment, the coil forming step is similar to that of Embodiment 5.

Here will be described the coil transfer step of transferring the continuous-pole coil Z9 formed at the coil forming step, from the magazine Z2 to the inserter jig Z6.

At this coil transfer step, as shown in Fig. 36, the continuous-pole coil Z9 is transferred from the magazine Z2 to the inserter jig Z6 by using the coil forming/inserting apparatus Z5 having the magazine Z2 and the inserter jig Z6.

At the coil transfer step, as shown inFig. 37, the magazine Z2 having formed the continuous-pole coil Z9 is moved at first forward to the inserter jig Z6. At this time, at each coil bobbin Z3 in the magazine Z2, each outer bobbin portion Z32 is at the winding position Z301 so that a tension is applied to each single-pole coil Z90. Moreover, this single-pole coil Z90 is kept so that its state may not be broken.

As shown in Fig. 38, the distal end portion Z621 of each coil accepting portion Z62 of the inserter jig Z6 is fitted in the fitting recess Z312 of each coil bobbin Z3 of the magazine Z2. By this fitting operation, the coil bobbin Z3 and the coil accepting portion Z62 are connected to form each transfer route Z60 for transferring each single-pole coil Z90.

In the fitting operation, moreover, the distal endportion Z621 of each coil accepting portion Z62 is inserted and arranged in the entire loops of each single-pole coil Z90 in each coil bobbin Z3.

Next at a releasing step, as shown in Fig. 39, the outer bobbin portion Z32 of each coil bobbin Z3 is moved to the aforementioned releasing position Z302. At this time, the coil bobbin Z3 is diametrically reduced in the forward direction. As a result, the single-pole coil Z90 is released from the coil bobbin Z3.

Next, the push-out core Z23 of the magazine Z2 is moved forward to the inserter jig Z6, as shown in Fig. 40. At this time, the individual single-pole coils Z90 wound around the outer circumferences of the individual coil bobbins Z3 are pushed out altogether to the aforementioned regulating positions, at which they abut against the push/insertion cores Z61 of the inserter jigs Z6.

At this time, moreover, while each transfer route Z60 is being kept in the loops of each single-pole coil Z90, all the single-pole coils Z90 can be simultaneously transferred together with the crossover wires from the individual coil bobbins Z3 to the individual coil accepting portions z62.

After this, the magazine Z2 is moved in the backward direction away from the inserter jig Z6, as shown in Fig. 41, so that the transfer of the continuous-pole coil Z9 having the continuous single-pole coils Z90 to the inserter jig z6 is completed.

Here will be described the coil inserting step.

At this coil inserting step, as shown in Fig. 42 to Fig. 44, the continuous-pole coil Z9 retained in the inserter jig z6 is inserted and arranged in the slots Z810 formed in the inner circumference of the stator core Z81.

At the coil inserting step, as shown in Fig. 42 and Fig. 43, the individual coil accepting portions Z62 of the inserter jig z6 are arranged at first to confront the inner circumference of the stator core Z81. At this time, the individual guides Z63 are arranged to confront the individual teeth Z811 between the individual slots Z810 in the inner circumference of the stator core Z81.

Next, the push/insertion core Z61 is moved forward to the stator core Z81, as shown in Fig. 44. At this time, the electric wires Z99 in the individual single-pole coils z90 retained in the individual coil accepting portions Z62 are inserted and arranged in the individual slots Z810. As the distal end of the push/insertion core Z61 moves forward over the distal ends of the coil accepting portions Z62, moreover, the single-pole coils Z90 are inserted and arranged in the slots z810 so that the continuous-pole coil Z9 can be assembled with the stator core Z81.

Thus, Embodiments 5 and 6 were executed to manufacture the stator in a three-phase motor composed of U-, V- and W-phases. In this embodiment, moreover, the magazine Z2 had the four coil bobbins Z3 and the three crossover bobbins Z41, and the inserter jig z6 had the eight coil accepting portions Z62 and the eight guides Z63.

In the magazine Z2 , moreover, the four-pole coil was formed as the continuous-pole coil Z9 having the four single-pole coils z90 and was transferred to the inserter jig Z6. Then, the two four-pole coils were assembled from the inserter jig Z6 with the stator core Z81 thereby to form the U-phase composed of the eight-pole coil with two four-pole coils assembled therein. For the V-phase and the W-phase, moreover, that assembly was made to form the eight-pole coil having the two four-pole coils.

In the coil forming/inserting apparatus Z5 thus constructed, the magazine Z2 can form the continuous-pole coil Z9 in the magazine Z2, can accept the individual single-pole coils Z90 reliably in the individual coil accepting portions z62 and can transfer the single-pole coils Z90 as the continuous-pole coil Z9 to the inserter jig Z6.

Specifically, the magazine Z2 is provided with the coil bobbins Z3 and can form the single-pole coils Z90 around the individual coil bobbins Z3 thereby to form the continuous-pole coil Z9. As a result, it is possible to form the individual single-pole coils Z90 around the individual coil bobbins z3 having their positional relations fixed, and to stabilize the lengths of the crossover wires Z995 to be formed between the single-pole coils Z90 wound around the coil bobbins Z3.

On the other hand, the inserter jig Z6 is provided with the individual coil accepting portions Z62, the distal ends z621 of which are individually fitted in the fitting recesses Z312 of the individual coil bobbins Z3. These coil bobbins Z3 and coil accepting portions Z62 can form the transfer routes z60 when they are connected to each other. When the individual single-pole coils Z90 are to be transferred from the coil bobbins Z3 to the coil accepting portions Z62, therefore, they can be reliably transferred along the transfer routes Z60 being retained in their loops.

Moreover, the individual single-pole coils Z90 can be accepted substantially simultaneously by the coil accepting portions z62. At these acceptances, therefore, the winding order of the individual electric wires Z99 around the single-pole coils Z90 is hardly different from that of the preceding winding operation. Specifically, the individual single-pole coils Z90 having their winding diameters enlarged from one side to the other side are not changed in their winding order when they are transferred to the inserter jig Z6, so that they can be transferred with the electric wires Z99 being array without change in the winding order.

Therefore, the continuous-pole coil Z9 can be transferred from the magazine Z2 to the inserter jig Z6 without any substantial change in its formed state.

## Claims

1. A coil forming apparatus for forming a continuous-pole coil (9) having a plurality of single-pole coils (90) wound with an electric wire (99) in a loop shape, **characterized:**
**by** comprising a magazine (2, Z2) made swingable around a swinging center axis (C2, ZC2);
in that said magazine includes: a holder (20, z22) made turnable around a rotating center axis (ZC3) different from said swinging center axis; and a plurality of coil bobbins (3, Z3) so arranged around said holder as to move their individual positions relative to the holder, for winding the electric wire around their circumferences; and
in that the individual coil bobbins can have their winding axes sequentially positioned to contain and adjoin said swinging center axis by the turns of the magazine around the rotating center axis.

2. A coil forming apparatus in Claim 1, **characterized:**
**in that** said holder can turn around said rotating center axis with respect the body of said magazine; and in that the rotating center axis is generally parallel to said swinging center axis.

3. A coil forming apparatus in Claim 1 or 2, **characterized: in that** the moving directions of said individual coil bobbins relative to said holder are in the extending direction of said swinging center axis; and **in that** each coil bobbin moves relative to the remaining coil bobbins so that it is set at a position protruding farther in the extending direction of the swinging center axis than the remaining coil bobbins.

4. A coil forming apparatus in any of Claims 1 to 3, **characterized:**
**in that** each of said coil bobbins includes: a stationary bobbin portion (31, Z31) attached to said holder; and a movable bobbin portion (32, Z32) arranged to confront said stationary bobbin portion; and
**in that** said movable bobbin portion is made so openable between a winding position for winding the electric wire and a releasing position for releasing the wound single-pole coil from the coil bobbin as to change the distance from the stationary bobbin portion.

5. A coil forming apparatus in Claim 4, **characterized:**
**in that** saidmovable bobbin portion has a circumference enlarged stepwise in the same direction as said moving direction.

6. A coil forming apparatus in any of Claims 1 to 5, **characterized: in that** crossover bobbins (41) are arranged between said individual coil bobbins for winding crossover wires joining the individual single-pole coils wound on the coil bobbins.

7. A coil forming method **characterized:**
**by** using a coil forming apparatus for forming a continuous-pole coil (9) having a plurality of single-pole coils (90) wound with an electric wire (99) in a loop shape, the coil forming apparutus including a magazine (2, Z2) made swingable around a swinging center axis (C2, ZC2), and constructed so that the magazine includes: a holder (20, Z22) made turnable around a rotating center axis (ZC3) different from said swinging center axis ZC2; and a plurality of coil bobbins (3, Z3) so arranged around said holder as to move their individual positions relative to the holder, for winding the electric wire around their circumferences, such that the coil bobbins can have their winding axes sequentially positioned to contain and adj oin said swinging center axis by the turns of the magazine around the rotating center axis;
by comprising:
an index step of positioning the winding axis of any object one for winding operation of said coil bobbins to contain and adjoin said swinging center axis, by turning said holder around the rotating center axis; and
a winding step of winding the electric wire around said object coil bobbin, by feeding said object coil bobbin with the electric wire and by swinging said magazine around said swinging center axis; and
in that similar index steps and winding steps are thereafter suitably repeated on the remaining coil bobbins as the object ones to form a continuous-pole coil.

8. A coil forming method in Claim 7, **characterized:**
**in that** at said index step, said holder is rotated around said rotating center axis with respect to the body of said magazine, to position the winding axes of said individual coil bobbins to contain and adjoin said swinging center axis.

9. A coil forming method in Claim 7 or 8, **characterized:**
**in that** at said index step, a protruding step is performed to set the coil bobbin for winding the electric wire, at a position to protrude farther in the extending direction of said swinging center axis than the remaining coil bobbins.

10. A coil forming method in any of Claims 7 to 9, **characterized: in that** after the continuous-pole coil was formed, a releasing step is performed to release said continuous-pole coil from said individual coil bobbins by reducing the circumferential lengths of said individual coil bobbins.

11. A coil forming method in Claim 10, **characterized:**
**in that** at said winding step, the single-pole coil having the electric wire winding diameter enlarged in said protruding direction is formed by establishing a circumferential state, in which the circumferential length of the coil bobbin for winding the electric wire is stepwise enlarged in the same direction as the moving direction; and
**in that** at said releasing step, said continuous-pole coil is released by establishing the state, in which the circumferential lengths of said individual coil bobbins are reduced in said protruding direction.

12. A coil forming method as set forth in any of Claims 7 to 11, **characterized:**
**in that** after said winding step was performed on any of the coil bobbins and before said winding step is performed on the next coil bobbin, a crossover line forming step is performed to form a crossover wire joining the individual single-pole coils by winding the electric wire around crossover bobbins arranged between said individual coil bobbins.

## Patentansprüche

1. Spulenherstellungseinrichtung zur Herstellung einer Wicklungsspule (9) mit einer Vielzahl von einpoligen Spulen (90), die mit einem elektrischen Draht (99) in Schleifenform gewickelt werden, **dadurch gekennzeichnet, dass**
die Einrichtung ein Magazin (2, Z2) aufweist, das um eine Schwenkmittelachse (C2, ZC2) schwenkbar ausgeführt ist;
das Magazin aufweist: einen Halter (20, Z22), der um eine von der Schwenkmittelachse verschiedene Drehmittelachse (ZC3) drehbar ausgeführt ist; und eine Vielzahl von Spulenwickelkernen (3, Z3), die so um den Halter herum angeordnet sind, dass ihre individuellen Positionen in Bezug auf den Halter bewegt werden, um den elektrischen Draht auf ihren jeweiligen Umfang aufzuwickeln; und
die Wickelachsen der einzelnen Spulenwickelkerne durch die Drehungen des Magazins um die Drehmittelachse nacheinander so positioniert werden können, dass sie die Schwenkmittelachse einschließen und daran angrenzen.

2. Spulenherstellungseinrichtung nach Anspruch 1, **dadurch gekennzeichnet, dass** sich der Halter bezüglich des Magazinkörpers um die Drehmittelachse drehen kann; und dass die Drehmittelachse im Allgemeinen parallel zur Schwenkmittelachse ist.

3. Spulenherstellungseinrichtung nach Anspruch 1 oder 2, **dadurch gekennzeichnet, dass** die Bewegungsrichtungen der einzelnen Spulenwickelkerne in Bezug auf den Halter in der Ausdehnungsrichtung der Schwenkmittelachse liegen; und dass sich jeder Spulenwickelkern bezüglich der übrigen Spulenwickelkerne so bewegt, dass er in einer in der Ausdehnungsrichtung der Schwenkmittelachse weiter vorstehenden Position angeordnet ist als die übrigen Spulenwickelkerne.

4. Spulenherstellungseinrichtung nach einem der Ansprüche 1 bis 3, **dadurch gekennzeichnet, dass**
jeder der Spulenwickelkerne aufweist: einen an dem Halter befestigten stationären Wickelkernabschnitt (31, Z31) und einen gegenüber dem stationären Wickelkernabschnitt angeordneten beweglichen Wickelkernabschnitt (32, Z32); und
jeder bewegliche Wickelkernabschnitt so ausgeführt ist, dass er zwischen einer Wickelposition zum Wickeln des elektrischen Drahts und einer Freigabeposition zur Freigabe der gewickelten einpoligen Spule von dem Spulenwickelkern geöffnet werden kann, um den Abstand vom stationären Wickelkernabschnitt zu verändern.

5. Spulenherstellungseinrichtung nach Anspruch 4, **dadurch gekennzeichnet, dass** der bewegliche Wickelkernabschnitt einen Umfang aufweist, der schrittweise in der gleichen Richtung wie der Bewegungsrichtung vergrößert wird.

6. Spulenherstellungseinrichtung nach einem der Ansprüche 1 bis 5, **dadurch gekennzeichnet, dass** zwischen den einzelnen Spulenwickelkernen Überkreuzungswickelkerne (41) zum Wickeln von Überkreuzungsdrähten angeordnet sind, welche die einzelnen, auf die Spulenwickelkerne gewickelten einpoligen Spulen verbinden.

7. Spulenherstellungsverfahren, **gekennzeichnet durch**:
Verwendung einer Spulenherstellungseinrichtung zur Herstellung einer Wicklungsspule (9) mit einer Vielzahl von einpoligen Spulen (90), die mit einem elektrischen Draht (99) in Schleifenform gewickelt werden, wobei die Spulenherstellungseinrichtung ein Magazin (2, Z2) aufweist, das um eine Schwenkmittelachse (C2, ZC2) schwenkbar ausgeführt ist, und so konstruiert ist, dass das Magazin aufweist: einen Halter (20, Z22), der um eine von der Schwenkmittelachse (ZC2) verschiedene Drehmittelachse (ZC3) drehbar ausgeführt ist; und eine Vielzahl von Spulenwickelkernen (3, Z3), die so um den Halter herum angeordnet sind, dass ihre individuellen Positionen in Bezug auf den Halter bewegt werden, um den elektrischen Draht auf ihren jeweiligen Umfang aufzuwickeln, so dass die Wickelachsen der Spulenwickelkerne **durch** die Drehungen des Magazins um die Drehmittelachse nacheinander so positioniert werden können, dass sie die Schwenkmittelachse einschließen und daran angrenzen;
wobei das Verfahren aufweist:
einen Indexierschritt, um **durch** Drehen des Halters um die Drehmittelachse die Wickelachse jedes Objekts zum Wickeln der Spulenwickelkerne so zu positionieren, dass sie die Schwenkmittelachse einschließt und daran angrenzt; und
einen Wickelschritt zum Wickeln des elektrischen Drahts um den Objekt-Spulenwickelkern, indem der elektrische Draht dem Objekt-Spulenwickelkern zugeführt wird und das Magazin um die Schwenkmittelachse geschwenkt wird; und
dass entsprechende Indexierschritte und Wickelschritte danach auf geeignete Weise an den übrigen Spulenwickelkernen als Wickelobjekten wiederholt werden, um eine Wicklungsspule herzustellen.

8. Spulenherstellungsverfahren nach Anspruch 7, **dadurch gekennzeichnet, dass** in dem Indexierschritt der Halter bezüglich des Magazinkörpers um die Drehmittelachse gedreht wird, um die Wickelachsen der einzelnen Spulenwickelkerne so zu positionieren, dass sie die Schwenkmittelachse einschließen und daran angrenzen.

9. Spulenherstellungsverfahren nach Anspruch 7 oder 8, **dadurch gekennzeichnet, dass** in dem Indexierschritt ein Vorschubschritt ausgeführt wird, um den Spulenwickelkern zum Aufwickeln des elektrischen Drahts im Vergleich zu den übrigen Spulenwickelkernen in eine weiter vorstehende Position in der Ausdehnungsrichtung der Schwenkmittelachse zu bringen.

10. Spulenherstellungsverfahren nach einem der Ansprüche 7 bis 9, **dadurch gekennzeichnet, dass** nach der Herstellung der Wicklungsspule ein Freigabeschritt ausgeführt wird, um die Wicklungsspule durch Verkleinern der Umfangslängen der individuellen Spulenwickelkerne von den individuellen Spulenwickelkernen zu lösen.

11. Spulenherstellungsverfahren nach Anspruch 10, **dadurch gekennzeichnet, dass**
in dem Wickelschritt die einpolige Spule mit dem in der vorstehenden Richtung vergrößerten Wickeldurchmesser des elektrischen Drahts durch Herstellen eines Umfangszustands geformt wird, in dem die Umfangslänge des Spulenwickelkerns zum Aufwickeln des elektrischen Drahts schrittweise in der gleichen Richtung wie der Bewegungsrichtung vergrößert wird; und
in dem Freigabeschritt die Wicklungsspule durch Herstellen eines Zustands freigegeben wird, in dem die Umfangslängen der individuellen Spulenwickelkerne in der vorstehenden Richtung verkleinert werden.

12. Spulenherstellungsverfahren nach einem der Ansprüche 7 bis 11, **dadurch gekennzeichnet, dass**:
nach Durchführung des Wickelschritts an einem der Spulenwickelkerne und vor Durchführung des Wickelschritts an dem nächsten Spulenwickelkern ein Schritt zur Herstellung einer Überkreuzungsleitung ausgeführt wird, um durch Wickeln des elektrischen Drahts auf zwischen den individuellen Spulenwickelkernen angeordnete Überkreuzungswickelkerne einen Überkreuzungsdraht zu formen, der die individuellen einpoligen Spulen verbindet.

## Revendications

1. Dispositif de bobinage pour former un bobinage de pôle continu (9) comportant une pluralité de bobines unipolaires (90) enroulées avec un fil électrique (99) bobiné en boucle, **caractérisé :**
**en ce qu'**il comprend un magasin (2, Z2) pouvant basculer autour d'un axe central de basculement (C2, ZC2) ;
**en ce que** ledit magasin inclut : un support (20, Z22) pouvant tourner autour d'un axe central de rotation (ZC3) différent dudit axe central de basculement ; et une pluralité de bobines à bobinage (3, Z3) agencées autour dudit support de façon à déplacer leurs positions individuelles relativement au support, pour enrouler le fil électrique autour de leurs circonférences ; et
**en ce que** les bobines à bobinage individuelles peuvent avoir leurs axes d'enroulement positionnés séquentiellement de manière à contenir et à se confondre avec ledit axe central de basculement du fait des rotations du magasin autour de l'axe central de rotation.

2. Dispositif de bobinage selon la revendication 1, **caractérisé :**
**en ce que** ledit support peut tourner autour dudit axe central de rotation par rapport au corps dudit magasin ; et en ce que l'axe central de rotation est globalement parallèle audit axe central de basculement.

3. Dispositif de bobinage selon la revendication 1 ou 2, **caractérisé : en ce que** les directions de déplacement desdites bobines à bobinage individuelles relativement audit support sont dans la direction d'extension dudit axe central de basculement ; et **en ce que** chaque bobine à bobinage se déplace relativement aux bobines à bobinage restantes de telle manière qu'elle est réglée dans une position saillante plus loin dans la direction d'extension de l'axe central de basculement que les bobines à bobinage restantes.

4. Dispositif de bobinage selon l'une quelconque des revendications 1 à 3, **caractérisé :**
**en ce que** chacune desdites bobines à bobinage inclut : une partie de bobine fixe (31, Z31) fixée sur ledit support ; et une partie de bobine mobile (32, Z32) agencée pour faire face à ladite partie de bobine fixe ; et
**en ce que** ladite partie de bobine mobile est faite de façon à pouvoir s'ouvrir entre une position d'enroulement pour enrouler le fil électrique et une position de libération pour libérer la bobine unipolaire enroulée de la bobine à bobinage de façon à changer la distance depuis la partie de bobine fixe.

5. Dispositif de bobinage selon la revendication 4, **caractérisé :**
**en ce que** ladite partie de bobine mobile a une circonférence agrandie par degrés dans la même direction que ladite direction de déplacement.

6. Dispositif de bobinage selon l'une quelconque des revendications 1 à 5, **caractérisé : en ce que** des bobines pour fil de liaison (41) sont agencées entre lesdites bobines à bobinage individuelles pour enrouler des fils de liaison joignant les bobines unipolaires individuelles enroulées sur les bobines à bobinage.

7. Procédé de bobinage **caractérisé :**
**par** l'utilisation d'un dispositif de bobinage pour former un bobinage de pôle continu (9) comportant une pluralité de bobines unipolaires (90) enroulées avec un fil électrique (99) bobiné en boucle, le dispositif de bobinage incluant un magasin (2, Z2) pouvant basculer autour d'un axe central de basculement (C2, ZC2), et construit de telle manière que le magasin inclut : un support (20, Z22) pouvant tourner autour d'un axe central de rotation (ZC3) différent dudit axe central de basculement (ZC2) ; et une pluralité de bobines à bobinage (3, Z3) agencées autour dudit support de façon à déplacer leurs positions individuelles relativement au support, pour enrouler le fil électrique autour de leurs circonférences, de telle manière que les bobines à bobinage peuvent avoir leurs axes d'enroulement positionnés séquentiellement de manière à contenir et à se confondre avec ledit axe central de basculement du fait des rotations du magasin autour de l'axe central de rotation ;
en ce qu'il comprend :
une étape de préparation consistant à positionner les axes d'enroulement d'un objet quelconque pour l'opération d'enroulement desdites bobines à bobinage de manière à contenir et à se confondre avec ledit axe central de basculement, en faisant tourner ledit support autour de l'axe central de rotation ; et
une étape d'enroulement consistant à enrouler le fil électrique autour de ladite bobine à bobinage, en alimentant ladite bobine à bobinage avec le fil électrique et en faisant basculer ledit magasin autour dudit axe central de basculement ; et
en ce que des étapes de préparation et d'enroulement similaires sont ensuite répétées convenablement sur les bobines à bobinage restantes en tant que objets quelconques pour former une bobine continue.

8. Procédé de bobinage selon la revendication 7, **caractérisé :**
**en ce que** lors de l'étape de préparation, ledit support est tourné autour dudit axe central de rotation par rapport au corps dudit magasin, pour positionner les axes d'enroulement desdites bobines à bobinage individuelles de manière à contenir et à se confondre avec ledit axe central de basculement.

9. Procédé de bobinage selon la revendication 7 ou 8, **caractérisé : en ce que** lors de l'étape de préparation, une étape de mise en saillie est réalisée pour placer la bobine à bobinage pour enrouler le fil électrique, dans une position plus proéminente dans la direction d'extension dudit axe central de basculement que les bobines restantes.

10. Procédé de bobinage selon l'une quelconque des revendications 7 à 9, **caractérisé : en ce qu'**après que la bobine de pôle continue a été formée, une étape de relâchement est réalisée pour libérer la bobine de pôle continu desdites bobines à bobinage individuelles en réduisant les longueurs circonférentielles desdits bobines à bobinage individuelles.

11. Procédé de bobinage selon la revendication 10, **caractérisé :**
**en ce que** lors de ladite étape d'enroulement, la bobine unipolaire ayant le diamètre d'enroulement de fil électrique agrandi dans ladite direction de saillie est formée en établissant un état circonférentiel, dans lequel la longueur circonférentielle de la bobine à bobinage pour enrouler le fil électrique est agrandie par degrés dans la même direction que la direction de déplacement ; et
**en ce qu'**au niveau de ladite étape de relâchement, ladite bobine de pôle continue est libérée en établissant l'état, dans lequel les longueurs circonférentielles desdites bobines à bobinage individuelles sont réduites dans ladite direction de saillie.

12. Procédé de bobinage selon l'une quelconque des revendications 7 à 11, **caractérisé :**
**en ce qu'**après que ladite étape d'enroulement a été réalisée sur l'une quelconque des bobines à bobinage et avant que ladite étape d'enroulement ne soit réalisée sur la prochaine bobine à bobinage, une étape de formation de ligne de liaison est réalisée pour former un fil de liaison joignant les bobines unipolaires individuelles en enroulant le fil électrique autour des bobines pour fil de liaison agencées entre lesdites bobines à bobinage individuelles.
